(19) Europäisches Patentamt
European Patent Office
Office européen des brevets

(11) **EP 4 787 840 A1**

(12) **EUROPEAN PATENT APPLICATION**
published in accordance with Art. 153(4) EPC

(43) Date of publication:
**05.08.2026 Bulletin 2026/32**

(21) Application number: **24881444.4**

(22) Date of filing: **12.10.2024**

(51) International Patent Classification (IPC):
***H04N 19/13*** *(2014.01)*

(52) Cooperative Patent Classification (CPC):
**H04N 19/124; H04N 19/13; H04N 19/146;**
**H04N 19/154; H04N 19/42; H04N 19/44**

(86) International application number:
**PCT/CN2024/124420**

(87) International publication number:
**WO 2025/087078 (01.05.2025 Gazette 2025/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **23.10.2023 CN 202311386262**

(71) Applicant: **HUAWEI TECHNOLOGIES CO., LTD.**
**Shenzhen 518129 (CN)**

(72) Inventors:
• **KANG, Ning**
**Shenzhen, Guangdong 518129 (CN)**
• **LIU, Zhengying**
**Shenzhen, Guangdong 518129 (CN)**

(74) Representative: **Isarpatent**
**Patent- und Rechtsanwälte Part G mbB**
**Friedrichstrasse 31**
**80801 München (DE)**

(54) **ENTROPY ENCODING/DECODING METHOD AND DEVICE**

(57) Embodiments of this application provide an entropy encoding and decoding method and apparatus. The entropy encoding method includes: obtaining first data, a probability distribution index of the first data, and preset information, where the preset information includes N thresholds and N quantized probability groups that correspond to N probability distributions, each of the N probability distributions corresponds to one threshold and one quantized probability group, relative entropies of n probability distributions in the N probability distributions are optimal relative entropies, n is greater than a preset value; searching, based on the probability distribution index of the first data, the preset information for a threshold and a quantized probability group that correspond to the first data; and performing entropy encoding on the first data based on the threshold and the quantized probability group that correspond to the first data. This can shorten a length of a bitstream obtained through entropy encoding.

FIG. 8

**Description**

**TECHNICAL FIELD**

Embodiments of this application relate to the field of encoding and decoding, and in particular, to an entropy encoding and decoding method and apparatus.

**BACKGROUND**

Audio/Video coding (Audio/Video encoding and decoding) and picture coding (picture encoding and decoding) are used in a wide range of digital video applications, for example, a broadcast digital television, video transmission over the internet and mobile networks, real-time conversational applications such as video chat and video conferencing, digital versatile discs (Digital Versatile Discs, DVDs), Blu-ray discs, video content acquisition and editing systems, and security applications of camcorders.

A large amount of audio/video data needs to be depicted even a short video, which may result in difficulties when the audio/video data is to be streamed or otherwise communicated across a network with a limited bandwidth capacity. Thus, the audio/video data or picture data is generally compressed before being communicated across modern telecommunication networks. Due to limited memory resources, a size of the audio/video data or the picture data may also be an issue when the audio/video data or the picture data is stored on a storage device. Audio/video or picture compression devices usually use software and/or hardware at a source to code the audio/video data or the picture data prior to transmission or storage, to decrease an amount of data required for representing digital audios/videos or pictures. The compressed data is then received at a destination by audio/video or picture decompression devices. With limited network resources and ever increasing demands of higher audio/video or picture quality, compression and decompression technologies need to be improved, and the improved technologies can increase a compression ratio without affecting picture quality.

Audio/video or picture compression processes usually involve entropy encoding, and a threshold and a quantized probability group on which entropy encoding depends affect a length of a bitstream obtained through encoding.

**SUMMARY**

This application provides an entropy encoding and decoding method and apparatus. The entropy encoding method can shorten a length of a bitstream obtained through entropy encoding, thereby reducing bit rate overheads.

According to a first aspect, an embodiment of this application provides an entropy encoding method. The method includes: first, obtaining first data, a probability distribution index of the first data, and preset information, where the preset information includes N thresholds and N quantized probability groups that correspond to N probability distributions, each of the N probability distributions corresponds to one threshold and one quantized probability group, relative entropies of n probability distributions in the N probability distributions are optimal relative entropies, a relative entropy of a first probability distribution represents a distance between a reference probability distribution corresponding to the first probability distribution and the first probability distribution, the first probability distribution is any one of the n probability distributions, N is a positive integer, n is an integer ranging from 1 to N, n is greater than a preset value, and each of the N probability distributions corresponds to one probability distribution index; then searching, based on the probability distribution index of the first data, the preset information for a threshold and a quantized probability group that correspond to the first data; and performing entropy encoding on the first data based on the threshold and the quantized probability group that correspond to the first data.

The preset value may be a quantity of probability distributions whose relative entropies are optimal relative entropies in N probability distributions in preset information in the conventional technology. In this way, a sum of relative entropies of the N probability distributions in the preset information used in an entropy encoding process in this application is less than a sum of the relative entropies of the N probability distributions in the preset information used in an entropy encoding process in the conventional technology. Entropy encoding is performed based on N probability distributions with a smaller sum of relative entropies, and a length of an obtained bitstream is smaller. Therefore, the entropy encoding method in this application can shorten a length of a bitstream obtained through entropy encoding, thereby reducing bit rate overheads.

For example, the probability distribution index, namely, an index, may be used to uniquely identify a probability distribution.

For example, the N probability distribution indexes one-to-one correspond to the N probability distributions.

For example, the N probability distribution indexes one-to-one correspond to the N thresholds.

For example, the N probability distribution indexes one-to-one correspond to the N quantized probability groups.

For example, a single quantized probability group includes one or more values.

For example, each of the N probability distributions is a quantized probability distribution obtained by quantizing a corresponding reference probability distribution.

For example, the relative entropy (Relative Entropy) may also be referred to as a KL divergence. The KL divergence is short for Kullback-Leibler divergence (Kullback-Leibler Divergence).

In a possible case, the first data may be any one of picture data, audio data, and video data.

In a possible case, the first data may be any one of processed picture data (for example, a feature of the picture data), processed audio data (for example, a feature of the audio data), and processed video data (for example, a feature of the video data).

It should be noted that N is not limited in this application.

According to the first aspect, the preset information is obtained through calculation based on a type of the reference probability distribution for minimizing the relative entropy.

For example, for an $i^{th}$ (i is an integer from 1 to N) probability distribution, calculation may be performed based on a type of a reference probability distribution corresponding to the $i^{th}$ probability distribution for minimizing a relative entropy, to obtain one threshold bound_table_r[i] and one quantized probability group pdf_r[i] that correspond to the $i^{th}$ probability distribution.

It should be noted that types of N reference probability distributions corresponding to the N probability distributions (one probability distribution corresponds to one reference probability distribution) are the same. A type of the reference probability distribution is not limited in this application.

According to any one of the first aspect or the implementations of the first aspect, the type of the reference probability distribution is a Gaussian probability distribution type.

It should be understood that the type of the reference probability distribution may be another probability distribution type, for example, a binomial distribution type or a Poisson distribution type.

According to any one of the first aspect or the implementations of the first aspect, n=N. In other words, the relative entropies of the N probability distributions are all optimal relative entropies. This can shorten the length of the bitstream obtained through entropy encoding to a maximum extent.

According to any one of the first aspect or the implementations of the first aspect, N=32. Compared with the conventional technology in which N is 35 (to be specific, the preset information in the conventional technology includes 35 thresholds and 35 quantized probability groups that correspond to 35 probability distributions), this application can reduce redundancy of the preset information, and reduce memory occupied by the preset information.

According to any one of the first aspect or the implementations of the first aspect, a quantized probability group corresponding to a second probability distribution includes H values, H is determined based on a threshold corresponding to the second probability distribution, H is a positive integer, and the second probability distribution is any one of the N probability distributions.

According to any one of the first aspect or the implementations of the first aspect, a value range corresponding to the second probability distribution is [-(bound_table_r[i]-1), (bound_table_r[i]-1)], H is a sum of quantities of integers within the value range, an integer within the value range has a step size of M, and M is a positive integer.

bound_table_r[i] is the threshold corresponding to the second probability distribution, i is a probability distribution index of the second probability distribution, and i is a positive integer.

For example, a boundary value of the value range corresponding to the second probability distribution may be used as a start point, and a value is selected from the value range based on the step size of M, to obtain an integer within the value range.

For example, it is assumed that bound_table_r[i]=2. If M=1, integers within a value range []-1, 1] include -1, 0, and 1, and H=3. If M=2, integers within a value range []-1, 1] include -1 and 1, and H=2.

For example, each integer within the value range corresponding to the second probability distribution corresponds to one value in the quantized probability group corresponding to the second probability distribution.

According to any one of the first aspect or the implementations of the first aspect, the H values are H numerators of quantized probabilities.

According to any one of the first aspect or the implementations of the first aspect, a denominator of the quantized probability corresponding to the numerator of the quantized probability is an integer power of 2.

First, the denominator of the quantized probability is the integer power of 2. This can help generate the preset information, and improve entropy encoding efficiency.

In addition, the quantized probability group includes the numerator of the quantized probability but does not include the denominator of the quantized probability. This can facilitate storage, and further reduce memory occupied by the preset information.

According to any one of the first aspect or the implementations of the first aspect, the denominator of the quantized probability is 256, and a quantized probability of a mark value corresponding to each of the N probability distributions is 1/256.

Because a sum of all numerators of quantized probabilities in each quantized probability group and a numerator of the quantized probability of the mark value is equal to the denominator of the quantized probability, the denominator of the quantized probability is 256. This can reduce, to some extent, complexity of establishing the preset information, and improve entropy encoding efficiency. In addition, it can be further ensured that a quantity of numerators of quantized probabilities included in each quantized probability group is not excessively large, to ensure that the preset information does not occupy excessive memory.

For example, the mark value may be set as required, for example, may be an opposite number (for example, -bound_table_r[i]) of the threshold corresponding to the probability distribution. This is not limited in this application.

According to any one of the first aspect or the implementations of the first aspect, the first data includes a plurality of symbols. Performing entropy encoding on the first data based on the threshold corresponding to the first data and the quantized probability group corresponding to the first data includes: determining whether an absolute value of a to-be-entropy-encoded symbol in the first data is less than a threshold corresponding to the to-be-entropy-encoded symbol; and when the absolute value of the to-be-entropy-encoded symbol is greater than or equal to the threshold corresponding to the to-be-entropy-encoded symbol, performing entropy encoding on the to-be-entropy-encoded symbol according to a first entropy encoding algorithm, updating the to-be-entropy-encoded symbol to a mark value, performing entropy encoding on the updated to-be-entropy-encoded symbol according to a second entropy encoding algorithm and based on a quantized probability group corresponding to the to-be-entropy-encoded symbols; or when the absolute value of the to-be-entropy-encoded symbol is less than the threshold corresponding to the to-be-entropy-encoded symbol, performing entropy encoding on the to-be-entropy-encoded symbol according to a second entropy encoding algorithm and based on a quantized probability group corresponding to the to-be-entropy-encoded symbol. In this manner, entropy encoding can be performed on a symbol (namely, a long-tail symbol) with a small probability, to effectively shorten the length of the bitstream obtained through entropy encoding.

For example, the first entropy encoding algorithm may be an OUTBOUND algorithm, and the second entropy encoding algorithm may be an INBOUND algorithm. It should be understood that the first entropy encoding algorithm and the second entropy encoding algorithm are not limited in this application.

According to any one of the first aspect or the implementations of the first aspect, a part of the N thresholds are 2, 2, 2, 2, 2, 3, and 3 respectively.

According to any one of the first aspect or the implementations of the first aspect,

> a first quantized probability group includes 251, 2, and 2;
> a second quantized probability group includes 245, 5, and 5;
> a third quantized probability group includes 231, 12, and 12;
> a fourth quantized probability group includes 211, 22, and 22;
> a fifth quantized probability group includes 188, 33, and 34;
> a sixth quantized probability group includes 157, 48, 48, 1, and 1; and
> a seventh quantized probability group includes 134, 57, 56, 4, and 4.

It should be noted that the first quantized probability group, the second quantized probability group, the third quantized probability group, and the like are merely intended to distinguish between a plurality of quantized probability groups, but do not represent a sorting order of the plurality of quantized probability groups.

According to any one of the first aspect or the implementations of the first aspect, when N=32 and n=N, the N thresholds are 1, 1, 1, 2, 2, 2, 2, 2, 3, 3, 4, 4, 5, 6, 7, 8, 9, 11, 13, 16, 18, 22, 26, 32, 38, 46, 55, 65, 77, 92, 106, and 128 respectively.

It should be noted that the N thresholds may alternatively be sorted in another order. A sorting order of the N thresholds is not limited in this application.

According to any one of the first aspect or the implementations of the first aspect, when N=32 and n=N,

> a first quantized probability group includes 255;
> a second quantized probability group includes 255;
> a third quantized probability group includes 255;
> a fourth quantized probability group includes 251, 2, and 2;
> a fifth quantized probability group includes 245, 5, and 5;
> a sixth quantized probability group includes 231, 12, and 12;
> a seventh quantized probability group includes 211, 22, and 22;
> an eighth quantized probability group includes 188, 33, and 34;
> a ninth quantized probability group includes 157, 48, 48, 1, and 1;
> a tenth quantized probability group includes 134, 57, 56, 4, and 4;
> an eleventh quantized probability group includes 111, 61, 61, 10, 10, 1, and 1;
> a twelfth quantized probability group includes 94, 62, 61, 17, 17, 2, and 2;

a thirteenth quantized probability group includes 77, 58, 58, 24, 24, 6, 6, 1, and 1;

a fourteenth quantized probability group includes 63, 52, 52, 29, 29, 11, 11, 3, 3, 1, and 1;

a fifteenth quantized probability group includes 52, 46, 46, 31, 30, 16, 16, 6, 6, 2, 2, 1, and 1;

a sixteenth quantized probability group includes 43, 39, 39, 30, 30, 19, 19, 10, 10, 5, 5, 2, 2, 1, and 1;

a seventeenth quantized probability group includes 35, 33, 33, 28, 28, 21, 21, 13, 13, 8, 8, 4, 4, 2, 2, 1, and 1;

an eighteenth quantized probability group includes 29, 28, 28, 25, 25, 20, 20, 15, 15, 10, 10, 7, 7, 4, 4, 2, 2, 1, 1, 1, and 1;

a nineteenth quantized probability group includes 24, 23, 23, 21, 21, 19, 18, 15, 15, 12, 12, 9, 9, 6, 6, 4, 4, 3, 3, 2, 2, 1, 1, 1, and 1;

a twentieth quantized probability group includes 19, 19, 19, 18, 18, 17, 17, 15, 15, 12, 12, 10, 10, 8, 8, 6, 6, 4, 4, 3, 3, 2, 2, 1, 1, 1, 1, 1, 1, 1, and 1;

a twenty-first quantized probability group includes 17, 16, 16, 16, 16, 15, 15, 13, 13, 12, 12, 10, 10, 9, 9, 7, 7, 6, 6, 4, 4, 3, 3, 2, 2, 2, 2, 1, 1, 1, 1, 1, 1, 1, and 1;

a twenty-second quantized probability group includes 14, 13, 13, 13, 13, 12, 12, 12, 12, 11, 11, 10, 10, 9, 9, 8, 8, 6, 6, 5, 5, 4, 5, 4, 4, 3, 3, 2, 2, 2, 2, 1, 1, 1, 1, 1, 1, 1, 1, 1, 1, and 1;

a twenty-third quantized probability group includes 11, 11, 11, 11, 11, 10, 10, 10, 10, 10, 10, 9, 9, 8, 7, 7, 7, 7, 6, 6, 5, 5, 5, 5, 4, 4, 3, 3, 3, 3, 2, 2, 2, 2, 2, 2, 1, 1, 1, 1, 1, 1, 1, 1, 1, 1, 1, 1, and 1;

a twenty-fourth quantized probability group includes 9, 9, 9, 9, 9, 9, 9, 8, 8, 8, 8, 8, 8, 7, 7, 7, 7, 6, 6, 6, 6, 5, 5, 5, 5, 4, 4, 4, 4, 4, 4, 3, 3, 3, 3, 2, 2, 2, 2, 2, 2, 2, 2, 1, 1, 1, 1, 1, 1, 1, 1, 1, 1, 1, 1, 1, 1, 1, 1, 1, 1, 1, 1, and 1;

a twenty-fifth quantized probability group includes 7, 7, 7, 7, 7, 7, 7, 7, 7, 7, 7, 7, 7, 6, 6, 6, 6, 6, 5, 5, 5, 5, 5, 5, 5, 4, 4, 4, 4, 4, 4, 3, 3, 3, 3, 3, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, and 1;

a twenty-sixth quantized probability group includes 6, 6, 6, 6, 6, 6, 6, 6, 6, 5, 6, 5, 5, 5, 5, 5, 5, 5, 5, 5, 5, 5, 5, 5, 4, 4, 4, 4, 4, 4, 4, 4, 3, 3, 3, 3, 3, 3, 3, 3, 3, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-seventh quantized probability group includes 5, 5, 5, 5, 5, 5, 5, 5, 5, 4, 4, 4, 4, 4, 4, 4, 4, 4, 4, 4, 4, 4, 4, 4, 4, 4, 4, 4, 3, 3, 3, 3, 3, 3, 3, 3, 3, 3, 3, 3, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-eighth quantized probability group includes 4, 4, 4, 4, 4, 4, 4, 4, 4, 4, 4, 4, 4, 4, 4, 4, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-ninth quantized probability group includes 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirtieth quantized probability group includes 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirty-first quantized probability group includes 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1; and

a thirty-second quantized probability group includes 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1.

It should be understood that the N quantized probability groups may alternatively be sorted in another order. A sorting order of the N quantized probability groups is not limited in this application.

In addition, a sorting order of the numerators of the quantized probabilities in each quantized probability group is not limited in this application.

For example, a location of an $i^{th}$ threshold corresponding to the $i^{th}$ probability distribution in the N thresholds is the same as a location of an $i^{th}$ quantized probability group corresponding to the $i^{th}$ probability distribution in the N quantized probability groups.

According to a second aspect, an embodiment of this application provides an entropy decoding method. The method includes: first, receiving a bitstream; next, obtaining a probability distribution index of second data and preset information that are in the bitstream, where the preset information includes N thresholds and N quantized probability groups that correspond to N probability distributions, each of the N probability distributions corresponds to one threshold and one quantized probability group, relative entropies of n probability distributions in the N probability distributions are optimal relative entropies, a relative entropy of a first probability distribution represents a distance between a reference probability distribution corresponding to the first probability distribution and the first probability distribution, the first probability distribution is any one of the n probability distributions, N is a positive integer, n is an integer ranging from 1 to N, n is greater than a preset value, and each of the N probability distributions corresponds to one probability distribution index; then searching, based on the probability distribution index of the second data, the preset information for a threshold and a quantized probability group that correspond to the second data; and then performing entropy decoding on the second data based on the threshold and the quantized probability group that correspond to the second data.

According to the second aspect, the preset information is obtained through calculation based on a type of the reference probability distribution for minimizing the relative entropy.

According to any one of the second aspect or the implementations of the second aspect, the type of the reference probability distribution is a Gaussian probability distribution type.

According to any one of the second aspect or the implementations of the second aspect, n=N.

According to any one of the second aspect or the implementations of the second aspect, N=32.

According to any one of the second aspect or the implementations of the second aspect, a quantized probability group corresponding to a second probability distribution includes H values, H is determined based on a threshold corresponding to the second probability distribution, H is a positive integer, and the second probability distribution is any one of the N probability distributions.

According to any one of the second aspect or the implementations of the second aspect, a value range corresponding to the second probability distribution is [-(bound_table_r[i]-1), (bound_table_r[i]-1)], H is a sum of quantities of integers within the value range, an integer within the value range has a step size of M, and M is a positive integer.

bound_table_r[i] is the threshold corresponding to the second probability distribution, i is a probability distribution index of the second probability distribution, and i is a positive integer.

According to any one of the second aspect or the implementations of the second aspect, the H values are H numerators of quantized probabilities.

According to any one of the second aspect or the implementations of the second aspect, a denominator of the quantized probability corresponding to the numerator of the quantized probability is an integer power of 2.

According to any one of the second aspect or the implementations of the second aspect, the denominator of the quantized probability is 256, and a quantized probability of a mark value corresponding to each of the N probability distributions is 1/256.

According to any one of the second aspect or the implementations of the second aspect, performing entropy decoding on the second data based on the threshold and the quantized probability group that correspond to the second data includes: performing entropy decoding on a to-be-entropy-decoded symbol according to a second entropy decoding algorithm and based on a quantized probability group corresponding to the to-be-entropy-decoded symbol in the second data, to obtain entropy-decoded data; determining whether the entropy-decoded data is a mark value; and when the entropy-decoded data is the mark value, performing entropy decoding on the entropy-decoded data according to a first entropy decoding algorithm, and updating the entropy-decoded data to a result obtained by performing entropy decoding according to the first entropy decoding algorithm.

According to any one of the second aspect or the implementations of the second aspect, a part of the N thresholds are 2, 2, 2, 2, 2, 3, and 3 respectively.

According to any one of the second aspect or the implementations of the second aspect,

> a first quantized probability group includes 251, 2, and 2;
> a second quantized probability group includes 245, 5, and 5;
> a third quantized probability group includes 231, 12, and 12;
> a fourth quantized probability group includes 211, 22, and 22;
> a fifth quantized probability group includes 188, 33, and 34;
> a sixth quantized probability group includes 157, 48, 48, 1, and 1; and
> a seventh quantized probability group includes 134, 57, 56, 4, and 4.

According to any one of the second aspect or the implementations of the second aspect, when N=32 and n=N, other thresholds in the N thresholds are 1, 1, 1, 2, 2, 2, 2, 2, 3, 3, 4, 4, 5, 6, 7, 8, 9, 11, 13, 16, 18, 22, 26, 32, 38, 46, 55, 65, 77, 92, 106, and 128 respectively.

According to any one of the second aspect or the implementations of the second aspect, when N=32 and n=N,

a first quantized probability group includes 255;

a second quantized probability group includes 255;

a third quantized probability group includes 255;

a fourth quantized probability group includes 251, 2, and 2;

a fifth quantized probability group includes 245, 5, and 5;

a sixth quantized probability group includes 231, 12, and 12;

a seventh quantized probability group includes 211, 22, and 22;

an eighth quantized probability group includes 188, 33, and 34;

a ninth quantized probability group includes 157, 48, 48, 1, and 1;

a tenth quantized probability group includes 134, 57, 56, 4, and 4;

an eleventh quantized probability group includes 111, 61, 61, 10, 10, 1, and 1;

a twelfth quantized probability group includes 94, 62, 61, 17, 17, 2, and 2;

a thirteenth quantized probability group includes 77, 58, 58, 24, 24, 6, 6, 1, and 1;

a fourteenth quantized probability group includes 63, 52, 52, 29, 29, 11, 11, 3, 3, 1, and 1;

a fifteenth quantized probability group includes 52, 46, 46, 31, 30, 16, 16, 6, 6, 2, 2, 1, and 1;

a sixteenth quantized probability group includes 43, 39, 39, 30, 30, 19, 19, 10, 10, 5, 5, 2, 2, 1, and 1;

a seventeenth quantized probability group includes 35, 33, 33, 28, 28, 21, 21, 13, 13, 8, 8, 4, 4, 2, 2, 1, and 1;

an eighteenth quantized probability group includes 29, 28, 28, 25, 25, 20, 20, 15, 15, 10, 10, 7, 7, 4, 4, 2, 2, 1, 1, 1, and 1;

a nineteenth quantized probability group includes 24, 23, 23, 21, 21, 19, 18, 15, 15, 12, 12, 9, 9, 6, 6, 4, 4, 3, 3, 2, 2, 1, 1, 1, and 1;

a twentieth quantized probability group includes 19, 19, 19, 18, 18, 17, 17, 15, 15, 12, 12, 10, 10, 8, 8, 6, 6, 4, 4, 3, 3, 2, 2, 1, 1, 1, 1, 1, 1, 1, and 1;

a twenty-first quantized probability group includes 17, 16, 16, 16, 16, 15, 15, 13, 13, 12, 12, 10, 10, 9, 9, 7, 7, 6, 6, 4, 4, 3, 3, 2, 2, 2, 2, 1, 1, 1, 1, 1, 1, 1, and 1;

a twenty-second quantized probability group includes 14, 13, 13, 13, 13, 12, 12, 12, 12, 11, 11, 10, 10, 9, 9, 8, 8, 6, 6, 5, 5, 4, 5, 4, 4, 3, 3, 2, 2, 2, 2, 1, 1, 1, 1, 1, 1, 1, 1, 1, 1, 1, and 1;

a twenty-third quantized probability group includes 11, 11, 11, 11, 11, 10, 10, 10, 10, 10, 10, 9, 9, 8, 8, 7, 7, 7, 7, 6, 6, 5, 5, 5, 5, 4, 4, 3, 3, 3, 3, 2, 2, 2, 2, 2, 2, 1, 1, 1, 1, 1, 1, 1, 1, 1, 1, 1, 1, and 1;

a twenty-fourth quantized probability group includes 9, 9, 9, 9, 9, 9, 9, 8, 8, 8, 8, 8, 8, 7, 7, 7, 7, 6, 6, 6, 6, 5, 5, 5, 5, 4, 4, 4, 4, 4, 3, 3, 3, 3, 2, 2, 2, 2, 2, 2, 2, 2, 1, 1, 1, 1, 1, 1, 1, 1, 1, 1, 1, 1, 1, 1, 1, 1, 1, 1, 1, 1, 1, and 1;

a twenty-fifth quantized probability group includes 7, 7, 7, 7, 7, 7, 7, 7, 7, 7, 7, 7, 7, 6, 6, 6, 6, 6, 6, 5, 5, 5, 5, 5, 5, 5, 4, 4, 4, 4, 4, 4, 3, 3, 3, 3, 3, 3, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, and 1;

a twenty-sixth quantized probability group includes 6, 6, 6, 6, 6, 6, 6, 6, 6, 5, 6, 5, 5, 5, 5, 5, 5, 5, 5, 5, 5, 5, 5, 4, 4, 4, 4, 4, 4, 4, 4, 4, 3, 3, 3, 3, 3, 3, 3, 3, 3, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-seventh quantized probability group includes 5, 5, 5, 5, 5, 5, 5, 5, 5, 4, 4, 4, 4, 4, 4, 4, 4, 4, 4, 4, 4, 4, 4, 4, 4, 4, 4, 4, 3, 3, 3, 3, 3, 3, 3, 3, 3, 3, 3, 3, 3, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-eighth quantized probability group includes 4, 4, 4, 4, 4, 4, 4, 4, 4, 4, 4, 4, 4, 4, 4, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-ninth quantized probability group includes 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirtieth quantized probability group includes 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirty-first quantized probability group includes 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1; and

a thirty-second quantized probability group includes 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1,

1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1.

Any one of the second aspect and the implementations of the second aspect corresponds to any one of the first aspect and the implementations of the first aspect. For technical effect corresponding to any one of the second aspect and the implementations of the second aspect, refer to technical effect corresponding to any one of the first aspect and the implementations of the first aspect. Details are not described herein again.

According to a third aspect, an embodiment of this application provides an entropy encoding method. The method includes: first, obtaining first data, a probability distribution index of the first data, and preset information, where the preset information includes N thresholds and N quantized probability groups that correspond to N probability distributions, each of the N probability distributions corresponds to one threshold and one quantized probability group, N is a positive integer, and each of the N probability distributions corresponds to one probability distribution index; next, searching, based on the probability distribution index of the first data, the preset information for a threshold and a quantized probability group that correspond to the first data; and then performing entropy encoding on the first data based on the threshold and the quantized probability group that correspond to the first data.

A first threshold is 2;

a second threshold is 2;
a third threshold is 2;
a fourth threshold is 2;
a fifth threshold is 2;
a sixth threshold is 3;
a seventh threshold is 3;
a first quantized probability group includes 251, 2, and 2;
a second quantized probability group includes 245, 5, and 5;
a third quantized probability group includes 231, 12, and 12;
a fourth quantized probability group includes 211, 22, and 22;
a fifth quantized probability group includes 188, 33, and 34;
a sixth quantized probability group includes 157, 48, 48, 1, and 1; and
a seventh quantized probability group includes 134, 57, 56, 4, and 4.

Relative entropies of the plurality of probability distributions corresponding to the plurality of thresholds and the plurality of quantized probability groups shown above are optimal relative entropies. In this way, a sum of relative entropies of the N probability distributions in the preset information used for entropy encoding can be reduced. Entropy encoding is performed based on N probability distributions with a smaller sum of relative entropies, and a length of an obtained bitstream is smaller. Therefore, the entropy encoding method in this application can shorten the length of the bitstream obtained through entropy encoding, thereby reducing bit rate overheads.

It should be understood that the first threshold, the second threshold, the third threshold, and the like are merely intended to distinguish between a plurality of thresholds, but do not represent a sorting order of the plurality of thresholds.

According to the third aspect, when N=32,

an eighth threshold is 1;
a ninth threshold is 1;
a tenth threshold is 1;
an eleventh threshold is 4;
a twelfth threshold is 4;
a thirteenth threshold is 5;
a fourteenth threshold is 6;
a fifteenth threshold is 7;
a sixteenth threshold is 8;
a seventeenth threshold is 9;
an eighteenth threshold is 11;
a nineteenth threshold is 13;
a twentieth threshold is 16;
a twenty-first threshold is 18;
a twenty-second threshold is 22;

a twenty-third threshold is 26;
a twenty-fourth threshold is 32;
a twenty-fifth threshold is 38;
a twenty-sixth threshold is 46;
a twenty-seventh threshold is 55;
a twenty-eighth threshold is 65;
a twenty-ninth threshold is 77;
a thirtieth threshold is 92;
a thirty-first threshold is 106; and
a thirty-second threshold is 128.

According to any one of the third aspect or the implementations of the third aspect, when N=32,

an eighth quantized probability group includes 255;
a ninth quantized probability group includes 255;
a tenth quantized probability group includes 255;
an eleventh quantized probability group includes 111, 61, 61, 10, 10, 1, and 1;
a twelfth quantized probability group includes 94, 62, 61, 17, 17, 2, and 2;
a thirteenth quantized probability group includes 77, 58, 58, 24, 24, 6, 6, 1, and 1;
a fourteenth quantized probability group includes 63, 52, 52, 29, 29, 11, 11, 3, 3, 1, and 1;
a fifteenth quantized probability group includes 52, 46, 46, 31, 30, 16, 16, 6, 6, 2, 2, 1, and 1;
a sixteenth quantized probability group includes 43, 39, 39, 30, 30, 19, 19, 10, 10, 5, 5, 2, 2, 1, and 1;
a seventeenth quantized probability group includes 35, 33, 33, 28, 28, 21, 21, 13, 13, 8, 8, 4, 4, 2, 2, 1, and 1;
an eighteenth quantized probability group includes 29, 28, 28, 25, 25, 20, 20, 15, 15, 10, 10, 7, 7, 4, 4, 2, 2, 1, 1, 1, and 1;
a nineteenth quantized probability group includes 24, 23, 23, 21, 21, 19, 18, 15, 15, 12, 12, 9, 9, 6, 6, 4, 4, 3, 3, 2, 2, 1, 1, 1, and 1;
a twentieth quantized probability group includes 19, 19, 19, 18, 18, 17, 17, 15, 15, 12, 12, 10, 10, 8, 8, 6, 6, 4, 4, 3, 3, 2, 2, 1, 1, 1, 1, 1, 1, 1, and 1;
a twenty-first quantized probability group includes 17, 16, 16, 16, 16, 15, 15, 13, 13, 12, 12, 10, 10, 9, 9, 7, 7, 6, 6, 4, 4, 3, 3, 2, 2, 2, 2, 1, 1, 1, 1, 1, 1, 1, and 1;
a twenty-second quantized probability group includes 14, 13, 13, 13, 13, 12, 12, 12, 12, 11, 11, 10, 10, 9, 9, 8, 8, 6, 6, 5, 5, 4, 5, 4, 4, 3, 3, 2, 2, 2, 2, 1, 1, 1, 1, 1, 1, 1, 1, 1, 1, 1, and 1;
a twenty-third quantized probability group includes 11, 11, 11, 11, 11, 10, 10, 10, 10, 10, 10, 9, 9, 8, 8, 7, 7, 7, 7, 6, 6, 5, 5, 5, 5, 4, 4, 3, 3, 3, 3, 2, 2, 2, 2, 2, 2, 1, 1, 1, 1, 1, 1, 1, 1, 1, 1, 1, 1, and 1;
a twenty-fourth quantized probability group includes 9, 9, 9, 9, 9, 9, 9, 8, 8, 8, 8, 8, 8, 7, 7, 7, 7, 6, 6, 6, 6, 5, 5, 5, 5, 4, 4, 4, 4, 4, 4, 3, 3, 3, 3, 2, 2, 2, 2, 2, 2, 2, 2, 1, 1, 1, 1, 1, 1, 1, 1, 1, 1, 1, 1, 1, 1, 1, 1, 1, 1, and 1;
a twenty-fifth quantized probability group includes 7, 7, 7, 7, 7, 7, 7, 7, 7, 7, 7, 7, 7, 6, 6, 6, 6, 6, 6, 5, 5, 5, 5, 5, 5, 5, 5, 4, 4, 4, 4, 4, 4, 3, 3, 3, 3, 3, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, and 1;
a twenty-sixth quantized probability group includes 6, 6, 6, 6, 6, 6, 6, 6, 6, 5, 6, 5, 5, 5, 5, 5, 5, 5, 5, 5, 5, 5, 4, 4, 4, 4, 4, 4, 4, 4, 4, 4, 3, 3, 3, 3, 3, 3, 3, 3, 3, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;
a twenty-seventh quantized probability group includes 5, 5, 5, 5, 5, 5, 5, 5, 5, 4, 4, 4, 4, 4, 4, 4, 4, 4, 4, 4, 4, 4, 4, 4, 4, 4, 4, 4, 3, 3, 3, 3, 3, 3, 3, 3, 3, 3, 3, 3, 3, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;
a twenty-eighth quantized probability group includes 4, 4, 4, 4, 4, 4, 4, 4, 4, 4, 4, 4, 4, 4, 4, 3, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;
a twenty-ninth quantized probability group includes 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;
a thirtieth quantized probability group includes 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;
a thirty-first quantized probability group includes 2, 2, 2, 2, 2, 2, 2, 2, 2, 2, 2, 2, 2, 2, 2, 2, 2, 2, 2, 2, 2, 2, 2, 2, 2, 2, 2, 2,

2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1; and
a thirty-second quantized probability group includes 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1.

According to a fourth aspect, an embodiment of this application provides an entropy decoding method. The method includes: first, receiving a bitstream; next, obtaining a probability distribution index of second data and preset information that are in the bitstream, where the preset information includes N thresholds and N quantized probability groups that correspond to N probability distributions, each of the N probability distributions corresponds to one threshold and one quantized probability group, N is a positive integer, and each of the N probability distributions corresponds to one probability distribution index; then searching, based on the probability distribution index of the second data, the preset information for a threshold and a quantized probability group that correspond to the second data; and then performing entropy decoding on the second data based on the threshold and the quantized probability group that correspond to the second data.

A first threshold is 2;

a second threshold is 2;
a third threshold is 2;
a fourth threshold is 2;
a fifth threshold is 2;
a sixth threshold is 3;
a seventh threshold is 3;
a first quantized probability group includes 251, 2, and 2;
a second quantized probability group includes 245, 5, and 5;
a third quantized probability group includes 231, 12, and 12;
a fourth quantized probability group includes 211, 22, and 22;
a fifth quantized probability group includes 188, 33, and 34;
a sixth quantized probability group includes 157, 48, 48, 1, and 1; and
a seventh quantized probability group includes 134, 57, 56, 4, and 4.

According to the fourth aspect, when N=32,

an eighth threshold is 1;
a ninth threshold is 1;
a tenth threshold is 1;
an eleventh threshold is 4;
a twelfth threshold is 4;
a thirteenth threshold is 5;
a fourteenth threshold is 6;
a fifteenth threshold is 7;
a sixteenth threshold is 8;
a seventeenth threshold is 9;
an eighteenth threshold is 11;
a nineteenth threshold is 13;
a twentieth threshold is 16;
a twenty-first threshold is 18;
a twenty-second threshold is 22;
a twenty-third threshold is 26;
a twenty-fourth threshold is 32;
a twenty-fifth threshold is 38;
a twenty-sixth threshold is 46;
a twenty-seventh threshold is 55;

a twenty-eighth threshold is 65;
a twenty-ninth threshold is 77;
a thirtieth threshold is 92;
a thirty-first threshold is 106; and
a thirty-second threshold is 128.

According to any one of the fourth aspect or the implementations of the fourth aspect, when N=32,

an eighth quantized probability group includes 255;
a ninth quantized probability group includes 255;
a tenth quantized probability group includes 255;
an eleventh quantized probability group includes 111, 61, 61, 10, 10, 1, and 1;
a twelfth quantized probability group includes 94, 62, 61, 17, 17, 2, and 2;
a thirteenth quantized probability group includes 77, 58, 58, 24, 24, 6, 6, 1, and 1;
a fourteenth quantized probability group includes 63, 52, 52, 29, 29, 11, 11, 3, 3, 1, and 1;
a fifteenth quantized probability group includes 52, 46, 46, 31, 30, 16, 16, 6, 6, 2, 2, 1, and 1;
a sixteenth quantized probability group includes 43, 39, 39, 30, 30, 19, 19, 10, 10, 5, 5, 2, 2, 1, and 1;
a seventeenth quantized probability group includes 35, 33, 33, 28, 28, 21, 21, 13, 13, 8, 8, 4, 4, 2, 2, 1, and 1;
an eighteenth quantized probability group includes 29, 28, 28, 25, 25, 20, 20, 15, 15, 10, 10, 7, 7, 4, 4, 2, 2, 1, 1, 1, and 1;
a nineteenth quantized probability group includes 24, 23, 23, 21, 21, 19, 18, 15, 15, 12, 12, 9, 9, 6, 6, 4, 4, 3, 3, 2, 2, 1, 1, 1, and 1;
a twentieth quantized probability group includes 19, 19, 19, 18, 18, 17, 17, 15, 15, 12, 12, 10, 10, 8, 8, 6, 6, 4, 4, 3, 3, 2, 2, 1, 1, 1, 1, 1, 1, 1, and 1;
a twenty-first quantized probability group includes 17, 16, 16, 16, 16, 15, 15, 13, 13, 12, 12, 10, 10, 9, 9, 7, 7, 6, 6, 4, 4, 3, 3, 2, 2, 2, 2, 1, 1, 1, 1, 1, 1, 1, and 1;
a twenty-second quantized probability group includes 14, 13, 13, 13, 13, 12, 12, 12, 12, 11, 11, 10, 10, 9, 9, 8, 8, 6, 6, 5, 5, 4, 5, 4, 4, 3, 3, 2, 2, 2, 2, 1, 1, 1, 1, 1, 1, 1, 1, 1, 1, and 1;
a twenty-third quantized probability group includes 11, 11, 11, 11, 11, 10, 10, 10, 10, 10, 10, 9, 9, 8, 8, 7, 7, 7, 7, 6, 6, 5, 5, 5, 5, 4, 4, 3, 3, 3, 3, 2, 2, 2, 2, 2, 2, 1, 1, 1, 1, 1, 1, 1, 1, 1, 1, 1, and 1;
a twenty-fourth quantized probability group includes 9, 9, 9, 9, 9, 9, 9, 8, 8, 8, 8, 8, 8, 7, 7, 7, 7, 6, 6, 6, 6, 5, 5, 5, 5, 4, 4, 4, 4, 4, 3, 3, 3, 3, 2, 2, 2, 2, 2, 2, 2, 2, 1, 1, 1, 1, 1, 1, 1, 1, 1, 1, 1, 1, 1, 1, 1, 1, 1, 1, and 1;
a twenty-fifth quantized probability group includes 7, 7, 7, 7, 7, 7, 7, 7, 7, 7, 7, 7, 7, 6, 6, 6, 6, 6, 6, 5, 5, 5, 5, 5, 5, 5, 4, 4, 4, 4, 4, 4, 3, 3, 3, 3, 3, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, and 1;
a twenty-sixth quantized probability group includes 6, 6, 6, 6, 6, 6, 6, 6, 6, 5, 6, 5, 5, 5, 5, 5, 5, 5, 5, 5, 5, 5, 4, 4, 4, 4, 4, 4, 4, 4, 3, 3, 3, 3, 3, 3, 3, 3, 3, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, and 1;
a twenty-seventh quantized probability group includes 5, 5, 5, 5, 5, 5, 5, 5, 5, 4, 4, 4, 4, 4, 4, 4, 4, 4, 4, 4, 4, 4, 4, 4, 4, 4, 4, 3, 3, 3, 3, 3, 3, 3, 3, 3, 3, 3, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;
a twenty-eighth quantized probability group includes 4, 4, 4, 4, 4, 4, 4, 4, 4, 4, 4, 4, 4, 4, 4, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;
a twenty-ninth quantized probability group includes 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;
a thirtieth quantized probability group includes 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;
a thirty-first quantized probability group includes 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1; and
a thirty-second quantized probability group includes 1, 1, 1, 1, 1, 1, 1, 1, 1, 1, 1, 1, 1, 1, 1, 1, 1, 1, 1, 1, 1, 1, 1, 1, 1, 1, 1,

1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1.

According to a fifth aspect, an embodiment of this application provides an entropy encoding apparatus. The entropy encoding apparatus includes:

a first information obtaining module, configured to obtain first data, a probability distribution index of the first data, and preset information, where the preset information includes N thresholds and N quantized probability groups that correspond to N probability distributions, each of the N probability distributions corresponds to one threshold and one quantized probability group, relative entropies of n probability distributions in the N probability distributions are optimal relative entropies, a relative entropy of a first probability distribution represents a distance between a reference probability distribution corresponding to the first probability distribution and the first probability distribution, the first probability distribution is any one of the n probability distributions, N is a positive integer, n is an integer ranging from 1 to N, n is greater than a preset value, and each of the N probability distributions corresponds to one probability distribution index;

a first information searching module, configured to search, based on the probability distribution index of the first data, the preset information for a threshold and a quantized probability group that correspond to the first data; and

a first entropy encoding module, configured to perform entropy encoding on the first data based on the threshold and the quantized probability group that correspond to the first data.

For example, the entropy encoding apparatus may be configured to perform the entropy encoding method in any one of the first aspect or the possible implementations of the first aspect.

Any one of the fifth aspect and the implementations of the fifth aspect corresponds to any one of the first aspect and the implementations of the first aspect. For technical effect corresponding to any one of the fifth aspect and the implementations of the fifth aspect, refer to technical effect corresponding to any one of the first aspect and the implementations of the first aspect. Details are not described herein again.

According to a sixth aspect, an embodiment of this application provides an entropy decoding apparatus. The entropy decoding apparatus includes:

a first bitstream receiving module, configured to receive a bitstream;

a second information obtaining module, configured to obtain a probability distribution index of second data and preset information that are in the bitstream, where the preset information includes N thresholds and N quantized probability groups that correspond to N probability distributions, each of the N probability distributions corresponds to one threshold and one quantized probability group, relative entropies of n probability distributions in the N probability distributions are optimal relative entropies, a relative entropy of a first probability distribution represents a distance between a reference probability distribution corresponding to the first probability distribution and the first probability distribution, the first probability distribution is any one of the n probability distributions, N is a positive integer, n is an integer ranging from 1 to N, n is greater than a preset value, and each of the N probability distributions corresponds to one probability distribution index;

a second information searching module, configured to search, based on the probability distribution index of the second data, the preset information for a threshold and a quantized probability group that correspond to the second data; and

a first entropy decoding module, configured to perform entropy decoding on the second data based on the threshold and the quantized probability group that correspond to the second data.

For example, the entropy decoding apparatus may be configured to perform the entropy decoding method in any one of the second aspect or the possible implementations of the second aspect.

Any one of the sixth aspect and the implementations of the sixth aspect corresponds to any one of the second aspect and the implementations of the second aspect. For technical effect corresponding to any one of the sixth aspect and the implementations of the sixth aspect, refer to technical effect corresponding to any one of the second aspect and the implementations of the second aspect. Details are not described herein again.

According to a seventh aspect, an embodiment of this application provides an entropy encoding apparatus. The entropy encoding apparatus includes:

a third information obtaining module, configured to obtain first data, a probability distribution index of the first data, and preset information, where the preset information includes N thresholds and N quantized probability groups that correspond to N probability distributions, each of the N probability distributions corresponds to one threshold and one quantized probability group, N is a positive integer, and each of the N probability distributions corresponds to one probability distribution index;

a third information searching module, configured to search, based on the probability distribution index of the first data, the preset information for a threshold and a quantized probability group that correspond to the first data; and

a second entropy encoding module, configured to perform entropy encoding on the first data based on the threshold and the quantized probability group that correspond to the first data.

A first threshold is 2;

a second threshold is 2;
a third threshold is 2;
a fourth threshold is 2;
a fifth threshold is 2;
a sixth threshold is 3;
a seventh threshold is 3;
a first quantized probability group includes 251, 2, and 2;
a second quantized probability group includes 245, 5, and 5;
a third quantized probability group includes 231, 12, and 12;
a fourth quantized probability group includes 211, 22, and 22;
a fifth quantized probability group includes 188, 33, and 34;
a sixth quantized probability group includes 157, 48, 48, 1, and 1; and
a seventh quantized probability group includes 134, 57, 56, 4, and 4.

For example, the entropy encoding apparatus may be configured to perform the entropy encoding method in any one of the third aspect or the possible implementations of the third aspect.

Any one of the seventh aspect and the implementations of the seventh aspect corresponds to any one of the third aspect and the implementations of the third aspect. For technical effect corresponding to any one of the seventh aspect and the implementations of the seventh aspect, refer to technical effect corresponding to any one of the third aspect and the implementations of the third aspect. Details are not described herein again.

According to an eighth aspect, an embodiment of this application provides an entropy decoding apparatus. The entropy decoding apparatus includes:

a second bitstream receiving module, configured to receive a bitstream;

a fourth information obtaining module, configured to obtain a probability distribution index of second data and preset information that are in the bitstream, where the preset information includes N thresholds and N quantized probability groups that correspond to N probability distributions, each of the N probability distributions corresponds to one threshold and one quantized probability group, N is a positive integer, and each of the N probability distributions corresponds to one probability distribution index;

a fourth information searching module, configured to search, based on the probability distribution index of the second data, the preset information for a threshold and a quantized probability group that correspond to the second data; and

a second entropy decoding module, configured to perform entropy decoding on the second data based on the threshold and the quantized probability group that correspond to the second data.

A first threshold is 2;

a second threshold is 2;
a third threshold is 2;
a fourth threshold is 2;
a fifth threshold is 2;
a sixth threshold is 3;
a seventh threshold is 3;
a first quantized probability group includes 251, 2, and 2;
a second quantized probability group includes 245, 5, and 5;
a third quantized probability group includes 231, 12, and 12;
a fourth quantized probability group includes 211, 22, and 22;
a fifth quantized probability group includes 188, 33, and 34;

a sixth quantized probability group includes 157, 48, 48, 1, and 1; and

a seventh quantized probability group includes 134, 57, 56, 4, and 4.

For example, the entropy decoding apparatus may be configured to perform the entropy decoding method in any one of the fourth aspect or the possible implementations of the fourth aspect.

Any one of the eighth aspect and the implementations of the eighth aspect corresponds to any one of the fourth aspect and the implementations of the fourth aspect. For technical effect corresponding to any one of the eighth aspect and the implementations of the eighth aspect, refer to technical effect corresponding to any one of the fourth aspect and the implementations of the fourth aspect. Details are not described herein again.

According to a ninth aspect, an embodiment of this application provides an entropy encoder. The entropy encoder may be configured to perform the entropy encoding method in any one of the first aspect and the implementations of the first aspect.

Any one of the ninth aspect and the implementations of the ninth aspect corresponds to any one of the first aspect and the implementations of the first aspect. For technical effect corresponding to any one of the ninth aspect and the implementations of the ninth aspect, refer to technical effect corresponding to any one of the first aspect and the implementations of the first aspect. Details are not described herein again.

According to a tenth aspect, an embodiment of this application provides an entropy decoder. The entropy decoder may be configured to perform the entropy decoding method in any one of the second aspect and the implementations of the second aspect.

Any one of the tenth aspect and the implementations of the tenth aspect corresponds to any one of the second aspect and the implementations of the second aspect. For technical effect corresponding to any one of the tenth aspect and the implementations of the tenth aspect, refer to technical effect corresponding to any one of the second aspect and the implementations of the second aspect. Details are not described herein again.

According to an eleventh aspect, an embodiment of this application provides an entropy encoder. The entropy encoder may be configured to perform the entropy encoding method in any one of the third aspect and the implementations of the third aspect.

Any one of the eleventh aspect and the implementations of the eleventh aspect corresponds to any one of the third aspect and the implementations of the third aspect. For technical effect corresponding to any one of the eleventh aspect and the implementations of the eleventh aspect, refer to technical effect corresponding to any one of the third aspect and the implementations of the third aspect. Details are not described herein again.

According to a twelfth aspect, an embodiment of this application provides an entropy decoder. The entropy decoder may be configured to perform the entropy decoding method in any one of the fourth aspect and the implementations of the fourth aspect.

Any one of the twelfth aspect and the implementations of the twelfth aspect corresponds to any one of the fourth aspect and the implementations of the fourth aspect. For technical effect corresponding to any one of the twelfth aspect and the implementations of the twelfth aspect, refer to technical effect corresponding to any one of the fourth aspect and the implementations of the fourth aspect. Details are not described herein again.

According to a thirteenth aspect, an embodiment of this application provides an encoder. The encoder includes the entropy encoder in the ninth aspect.

Any one of the thirteenth aspect and the implementations of the thirteenth aspect corresponds to any one of the first aspect and the implementations of the first aspect. For technical effect corresponding to any one of the thirteenth aspect and the implementations of the thirteenth aspect, refer to technical effect corresponding to any one of the first aspect and the implementations of the first aspect. Details are not described herein again.

It should be noted that the encoder in the thirteenth aspect may be a conventional encoder, or may be an AI (Artificial Intelligence, AI) encoder.

According to a fourteenth aspect, an embodiment of this application provides a decoder. The encoder includes the entropy decoder in the tenth aspect.

Any one of the fourteenth aspect and the implementations of the fourteenth aspect corresponds to any one of the second aspect and the implementations of the second aspect. For technical effect corresponding to any one of the fourteenth aspect and the implementations of the fourteenth aspect, refer to technical effect corresponding to any one of the second aspect and the implementations of the second aspect. Details are not described herein again.

It should be noted that the encoder in the fourteenth aspect may be a conventional decoder, or may be an AI decoder.

According to a fifteenth aspect, an embodiment of this application provides an encoder. The encoder includes the entropy encoder in the eleventh aspect.

Any one of the fifteenth aspect and the implementations of the fifteenth aspect corresponds to any one of the third aspect and the implementations of the third aspect. For technical effect corresponding to any one of the fifteenth aspect and the implementations of the fifteenth aspect, refer to technical effect corresponding to any one of the third aspect and the implementations of the third aspect. Details are not described herein again.

It should be noted that the encoder in the fifteenth aspect may be a conventional encoder, or may be an AI encoder.

According to a sixteenth aspect, an embodiment of this application provides a decoder. The encoder includes the entropy decoder in the twelfth aspect.

Any one of the sixteenth aspect and the implementations of the sixteenth aspect corresponds to any one of the fourth aspect and the implementations of the fourth aspect. For technical effect corresponding to any one of the sixteenth aspect and the implementations of the sixteenth aspect, refer to technical effect corresponding to any one of the fourth aspect and the implementations of the fourth aspect. Details are not described herein again.

It should be noted that the encoder in the sixteenth aspect may be a conventional decoder, or may be an AI decoder.

According to a seventeenth aspect, an embodiment of this application provides a coder, including a storage and a processor. The storage is coupled to the processor. The storage stores program instructions. When the program instructions are executed by the processor, an electronic device is enabled to perform the entropy encoding method in any one of the first aspect or the possible implementations of the first aspect.

Any one of the seventeenth aspect and the implementations of the seventeenth aspect corresponds to any one of the first aspect and the implementations of the first aspect. For technical effect corresponding to any one of the seventeenth aspect and the implementations of the seventeenth aspect, refer to technical effect corresponding to any one of the first aspect and the implementations of the first aspect. Details are not described herein again.

According to an eighteenth aspect, an embodiment of this application provides a coder, including a storage and a processor. The storage is coupled to the processor. The storage stores program instructions. When the program instructions are executed by the processor, an electronic device is enabled to perform the entropy decoding method in any one of the second aspect or the possible implementations of the second aspect.

Any one of the eighteenth aspect and the implementations of the eighteenth aspect corresponds to any one of the second aspect and the implementations of the second aspect. For technical effect corresponding to any one of the eighteenth aspect and the implementations of the eighteenth aspect, refer to technical effect corresponding to any one of the second aspect and the implementations of the second aspect. Details are not described herein again.

According to a nineteenth aspect, an embodiment of this application provides a coder, including a storage and a processor. The storage is coupled to the processor. The storage stores program instructions. When the program instructions are executed by the processor, an electronic device is enabled to perform the entropy encoding method in any one of the third aspect or the possible implementations of the third aspect.

Any one of the nineteenth aspect and the implementations of the nineteenth aspect corresponds to any one of the third aspect and the implementations of the third aspect. For technical effect corresponding to any one of the nineteenth aspect and the implementations of the nineteenth aspect, refer to technical effect corresponding to any one of the third aspect and the implementations of the third aspect. Details are not described herein again.

According to a twentieth aspect, an embodiment of this application provides a coder, including a storage and a processor. The storage is coupled to the processor. The storage stores program instructions. When the program instructions are executed by the processor, an electronic device is enabled to perform the entropy decoding method in any one of the fourth aspect or the possible implementations of the fourth aspect.

Any one of the twentieth aspect and the implementations of the twentieth aspect corresponds to any one of the fourth aspect and the implementations of the fourth aspect. For technical effect corresponding to any one of the twentieth aspect and the implementations of the twentieth aspect, refer to technical effect corresponding to any one of the fourth aspect and the implementations of the fourth aspect. Details are not described herein again.

According to a twenty-first aspect, an embodiment of this application provides a computer-readable storage medium. The computer-readable storage medium stores a computer program. When the computer program is run on a computer or a processor, the computer or the processor is enabled to perform the entropy encoding method in any one of the first aspect or the possible implementations of the first aspect, or the computer or the processor is enabled to perform the entropy encoding method in any one of the third aspect or the possible implementations of the third aspect.

Any one of the twenty-first aspect and the implementations of the twenty-first aspect corresponds to any one of the first aspect and the implementations of the first aspect, or corresponds to any one of the third aspect and the implementations of the third aspect. For technical effect corresponding to any one of the twenty-first aspect and the implementations of the twenty-first aspect, refer to technical effect corresponding to any one of the first aspect and the implementations of the first aspect, or refer to technical effect corresponding to any one of the third aspect and the implementations of the third aspect. Details are not described herein again.

According to a twenty-second aspect, an embodiment of this application provides a computer-readable storage medium. The computer-readable storage medium stores a computer program. When the computer program is run on a computer or a processor, the computer or the processor is enabled to perform the entropy decoding method in any one of the second aspect or the possible implementations of the second aspect, or perform the entropy decoding method in any one of the fourth aspect or the possible implementations of the fourth aspect.

Any one of the twenty-second aspect and the implementations of the twenty-second aspect corresponds to any one of the second aspect and the implementations of the second aspect, or corresponds to any one of the fourth aspect and the implementations of the fourth aspect. For technical effect corresponding to any one of the twenty-second aspect and the implementations of the twenty-second aspect, refer to technical effect corresponding to any one of the second aspect and the implementations of the second aspect, or refer to technical effect corresponding to any one of the fourth aspect and the implementations of the fourth aspect. Details are not described herein again.

According to a twenty-third aspect, an embodiment of this application provides a computer program product. The computer program product includes computer instructions. When the computer instructions are executed by a computer or a processor, the computer or the processor is enabled to perform the entropy encoding method in any one of the first aspect or the possible implementations of the first aspect, or the computer or the processor is enabled to perform the entropy encoding method in any one of the third aspect or the possible implementations of the third aspect.

Any one of the twenty-third aspect and the implementations of the twenty-third aspect corresponds to any one of the first aspect and the implementations of the first aspect, or corresponds to any one of the third aspect and the implementations of the third aspect. For technical effect corresponding to any one of the twenty-third aspect and the implementations of the twenty-third aspect, refer to technical effect corresponding to any one of the first aspect and the implementations of the first aspect, or refer to technical effect corresponding to any one of the third aspect and the implementations of the third aspect. Details are not described herein again.

According to a twenty-fourth aspect, an embodiment of this application provides a computer program product. The computer program product includes computer instructions. When the computer instructions are executed by a computer or a processor, the computer or the processor is enabled to perform the entropy decoding method in any one of the second aspect or the possible implementations of the second aspect, or perform the entropy decoding method in any one of the fourth aspect or the possible implementations of the fourth aspect.

Any one of the twenty-fourth aspect and the implementations of the twenty-fourth aspect corresponds to any one of the second aspect and the implementations of the second aspect, or corresponds to any one of the fourth aspect and the implementations of the fourth aspect. For technical effect corresponding to any one of the twenty-fourth aspect and the implementations of the twenty-fourth aspect, refer to technical effect corresponding to any one of the second aspect and the implementations of the second aspect, or refer to technical effect corresponding to any one of the fourth aspect and the implementations of the fourth aspect. Details are not described herein again.

According to a twenty-fifth aspect, an embodiment of this application provides a bitstream generation method. A bitstream may be generated in any one of the first aspect and the implementations of the first aspect, or a bitstream may be generated in any one of the third aspect and the implementations of the third aspect.

Any one of the twenty-fifth aspect and the implementations of the twenty-fifth aspect corresponds to any one of the first aspect and the implementations of the first aspect, or corresponds to any one of the third aspect and the implementations of the third aspect. For technical effect corresponding to any one of the twenty-fifth aspect and the implementations of the twenty-fifth aspect, refer to technical effect corresponding to any one of the first aspect and the implementations of the first aspect, or refer to technical effect corresponding to any one of the third aspect and the implementations of the third aspect. Details are not described herein again.

According to a twenty-sixth aspect, an embodiment of this application provides a bitstream storage apparatus. The apparatus includes a receiver and at least one storage medium. The receiver is configured to receive a bitstream. The at least one storage medium is configured to store the bitstream. The bitstream is generated in any one of the first aspect and the implementations of the first aspect, or is generated in any one of the third aspect and the implementations of the third aspect.

Any one of the twenty-sixth aspect and the implementations of the twenty-sixth aspect corresponds to any one of the first aspect and the implementations of the first aspect, or corresponds to any one of the third aspect and the implementations of the third aspect. For technical effect corresponding to any one of the twenty-sixth aspect and the implementations of the twenty-sixth aspect, refer to technical effect corresponding to any one of the first aspect and the implementations of the first aspect, or refer to technical effect corresponding to any one of the third aspect and the implementations of the third aspect. Details are not described herein again.

According to a twenty-seventh aspect, an embodiment of this application provides a bitstream transmission apparatus. The apparatus includes a transmitter and at least one storage medium. The at least one storage medium is configured to store a bitstream. The bitstream is generated in any one of the first aspect and the implementations of the first aspect, or is generated in any one of the third aspect and the implementations of the third aspect. The transmitter is configured to: obtain the bitstream from the storage medium, and send the bitstream to a device-side device through a transmission medium.

Any one of the twenty-seventh aspect and the implementations of the twenty-seventh aspect corresponds to any one of the first aspect and the implementations of the first aspect, or corresponds to any one of the third aspect and the implementations of the third aspect. For technical effect corresponding to any one of the twenty-seventh aspect and the

EP 4 787 840 A1

implementations of the twenty-seventh aspect, refer to technical effect corresponding to any one of the first aspect and the implementations of the first aspect, or refer to technical effect corresponding to any one of the third aspect and the implementations of the third aspect. Details are not described herein again.

According to a twenty-eighth aspect, an embodiment of this application provides a bitstream distribution system. The system includes: at least one storage medium, configured to store at least one bitstream, where the at least one bitstream is generated in any one of the first aspect and the implementations of the first aspect, or is generated in any one of the third aspect and the implementations of the third aspect; and a streaming media device, configured to: obtain a target bitstream from the at least one storage medium, and send the target bitstream to a device-side device, where the streaming media device includes a content server or a content distribution server.

Any one of the twenty-eighth aspect and the implementations of the twenty-eighth aspect corresponds to any one of the first aspect and the implementations of the first aspect, or corresponds to any one of the third aspect and the implementations of the third aspect. For technical effect corresponding to any one of the twenty-eighth aspect and the implementations of the twenty-eighth aspect, refer to technical effect corresponding to any one of the first aspect and the implementations of the first aspect, or refer to technical effect corresponding to any one of the third aspect and the implementations of the third aspect. Details are not described herein again.

It should be noted that the entropy encoding method and the entropy decoding method in this application may be implemented by software, or may be implemented by hardware. This is not limited in this application.

It should be noted that an algorithm used for entropy encoding and entropy decoding is not limited in this application, for example, may be Huffman coding (Huffman code), arithmetic coding (AC), and an asymmetric numeral system (ANS).

## BRIEF DESCRIPTION OF DRAWINGS

FIG. 1A is a block diagram of an example of an audio/video/picture coding system used to implement an embodiment of the present invention;
FIG. 1B is a block diagram of another example of an audio/video/picture coding system used to implement an embodiment of the present invention;
FIG. 2 is a diagram of an example of an encoder;
FIG. 3 is a diagram of an example of a decoder;
FIG. 4 is a diagram of an example of a structure of an encoder;
FIG. 5 is a diagram of an example of a structure of a decoder;
FIG. 6 is a diagram of an example of a structure of an encoder;
FIG. 7 is a diagram of an example of a structure of a decoder;
FIG. 8 is a flowchart of an example of an entropy encoding process;
FIG. 9 is a flowchart of an example of an entropy decoding process;
FIG. 10 is a diagram of an example of an entropy encoding apparatus;
FIG. 11 is a diagram of an example of an entropy decoding apparatus;
FIG. 12 is a diagram of an example of an entropy encoding apparatus;
FIG. 13 is a diagram of an example of an entropy decoding apparatus; and
FIG. 14 is a diagram of an example of a structure of an apparatus.

## DESCRIPTION OF EMBODIMENTS

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for associated objects and indicates that three relationships may exist. For example, A and/or B may indicate the following three cases: Only A exists, both A and B exist, and only B exists.

In the specification and claims of embodiments of this application, the terms "first", "second", and the like are intended to distinguish between different objects but do not indicate a particular order of the objects. For example, a first target object and a second target object are intended to distinguish between different target objects, but are not used to describe a particular order of the target objects.

In embodiments of this application, the word "example", "for example", or the like is used to represent giving an example, an illustration, or a description. Any embodiment or design scheme described as an "example" or "for example" in

17

embodiments of this application should not be explained as being more preferred or having more advantages than another embodiment or design scheme. Exactly, the word "example", "for example", or the like is used to present a related concept in a specific manner.

In descriptions of embodiments of this application, "a plurality of" means two or more, unless otherwise specified. For example, a plurality of processing units are two or more processing units, and a plurality of systems are two or more systems.

For example, an entropy encoding and decoding method in this application may be applied to entropy encoding and decoding for an audio, a video, and a picture. In this application, entropy encoding and decoding for the video is used as an example for description.

For example, the entropy encoding and decoding method in this application may be applied to a conventional encoding and decoding scenario, or may be applied to an AI encoding and decoding scenario. This is not limited in this application.

Video coding usually indicates processing of a sequence of pictures that form a video or a video sequence. In the field of video coding, the terms "picture (picture)", "frame (frame)", and "image (image)" may be used as synonyms. Video coding (or coding in general) includes two parts video encoding and video decoding. Video encoding is performed at a source side, and typically includes processing (for example, compressing) raw video pictures to reduce an amount of data required for representing the video pictures (for more efficient storage and/or transmission). Video decoding is performed at a destination side, and typically includes inverse processing in comparison with processing of an encoder to reconstruct the video pictures. "Coding" of a video picture (or a picture in general) in embodiments should be understood to as "encoding" or "decoding" of a video picture or a video sequence. A combination of an encoding part and a decoding part is also referred to as encoding and decoding (encoding and decoding, CODEC).

In a case of lossless video coding, a raw video picture can be reconstructed. In other words, a reconstructed video picture has same quality as the raw video picture (assuming no transmission loss or other data loss during storage or transmission). In a case of lossy video coding, further compression is performed through, for example, quantization, to reduce an amount of data required for representing a video picture, and the video picture cannot be completely reconstructed on a decoder side. In other words, quality of a reconstructed video picture is lower or worse than that of the raw video picture.

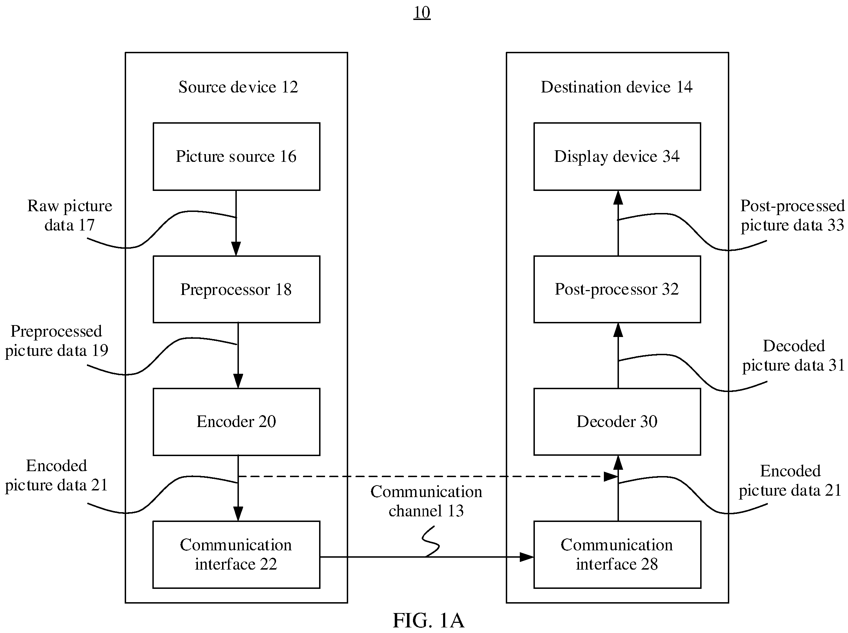

In the following embodiments of a coding system 10, an encoder 20 and a decoder 30 are described based on FIG. 1A to FIG. 7.

FIG. 1A is a block diagram of an example of a coding system 10 according to an embodiment of this application, for example, a video coding system 10 (or a coding system 10 for short) that may utilize a technology of this application. A video encoder 20 (or the encoder 20 for short) and a video decoder 30 (or the decoder 30 for short) of the video coding system 10 represent devices that may be configured to perform technologies in accordance with various examples described in this application.

As shown in FIG. 1A, the coding system 10 includes a source device 12. The source device 12 is configured to provide encoded picture data 21, for example, an encoded picture, to a destination device 14 for decoding the encoded picture data 21.

The source device 12 includes the encoder 20, and may additionally, that is, optionally, include a picture source 16, a preprocessor (or preprocessing unit) 18, for example, a picture preprocessor, and a communication interface (or communication unit) 22.

The picture source 16 may include or be any type of picture capturing device for capturing a real-world picture and the like, and/or any type of picture generating device, for example a computer graphics processing unit for generating a computer animated picture, or any type of device for obtaining and/or providing a real-world picture, a computer generated picture (for example, screen content, a virtual reality (virtual reality, VR) picture) and/or any combination thereof (for example, an augmented reality (augmented reality, AR) picture). The picture source may be any type of memory or storage storing any of the foregoing pictures.

In order to distinguish processing performed by the preprocessor (or preprocessing unit) 18, a picture (or picture data) 17 may also be referred to as a raw picture (or raw picture data) 17.

The preprocessor 18 is configured to receive the raw picture data 17 and preprocess the raw picture data 17, to obtain a preprocessed picture (or preprocessed picture data) 19. Preprocessing performed by the preprocessor 18 may, for example, include trimming, color format conversion (for example, from RGB to YCbCr), color correction, or de-noising. It may be understood that the preprocessing unit 18 may be an optional component.

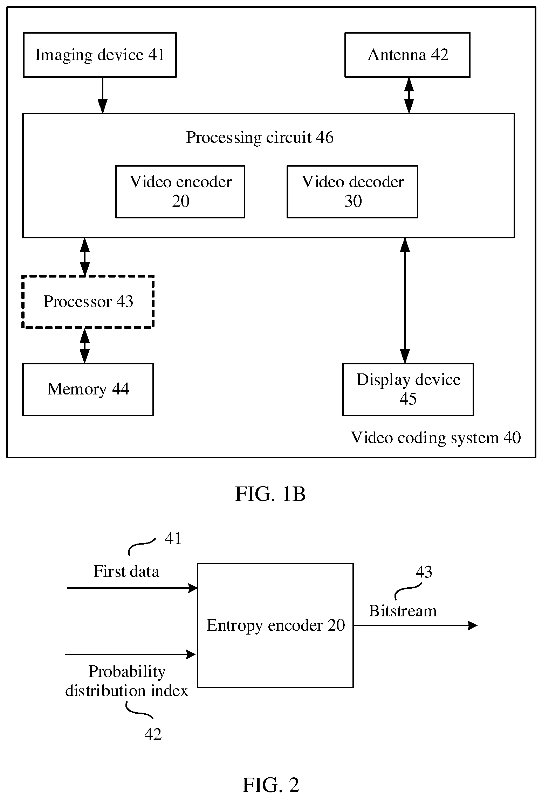

The video encoder (or encoder) 20 is configured to receive the preprocessed picture data 19 and provide the encoded picture data 21 (further descriptions are provided below, for example, based on FIG. 2, FIG. 4, and FIG. 6).

A communication interface 22 of the source device 12 may be configured to receive the encoded picture data 21 and send the encoded picture data 21 (or any further processed version thereof) over a communication channel 13 to another device, for example, the destination device 14 or any other device, for storage or direct reconstruction.

The destination device 14 includes the decoder 30, and may additionally, that is, optionally, include a communication interface (or communication unit) 28, a post-processor (or post-processing unit) 32, and a display device 34.

The communication interface 28 of the destination device 14 is configured to directly receive the encoded picture data 21 (or any other processed version) from the source device 12 or any other source device such as a storage device, for example, an encoded picture data storage device, and provide the encoded picture data 21 to the decoder 30.

The communication interface 22 and the communication interface 28 may be configured to send or receive the encoded picture data (or encoded data) 21 via a direct communication link between the source device 12 and the destination device 14, for example, a direct wired or wireless connection, or via any type of network, for example, a wired or wireless network or any combination thereof, or any type of private and public network, or any type of combination thereof.

For example, the communication interface 22 may be configured to package the encoded picture data 21 into an appropriate format, for example, packets, and/or process the encoded picture data using any type of transmission encoding or processing for transmission via a communication link or communication network.

The communication interface 28, corresponding to the communication interface 22, may be, for example, configured to receive the transmitted data and process the transmitted data using any type of corresponding transmission decoding or processing and/or de-packaging to obtain the encoded picture data 21.

Both the communication interface 22 and the communication interface 28 may be configured as unidirectional communication interfaces as indicated by the arrow for the communication channel 13 in FIG. 1A pointing from the source device 12 to the destination device 14, or bi-directional communication interfaces, and may be configured, for example, to send and receive messages, for example, to set up a connection, to acknowledge and exchange any other information related to the communication link and/or data transmission, for example, encoded picture data transmission.

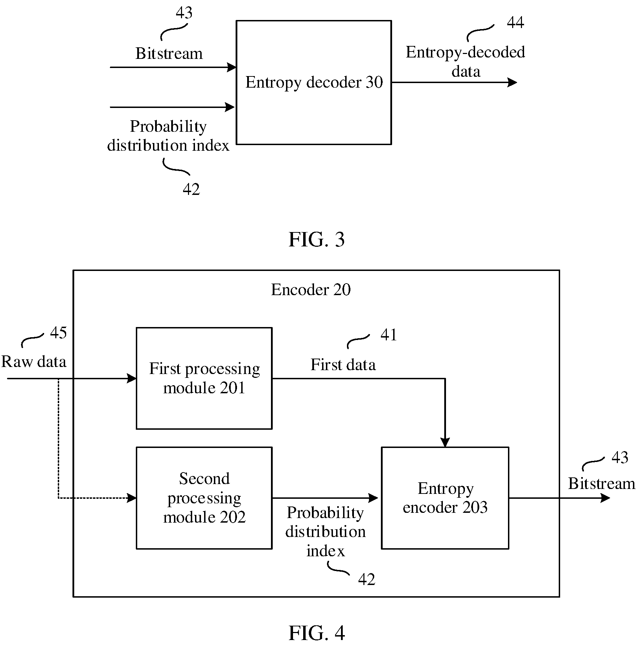

The video decoder (or decoder) 30 is configured to receive the encoded picture data 21 and provide decoded picture data (or decoded picture data) 31 (further descriptions are provided below, for example, based on in FIG. 3, FIG. 5, or FIG. 7).

The post-processor 32 is configured to post-process the decoded picture data 31 (also referred to as reconstructed picture data), for example, the decoded picture, to obtain post-processed picture data 33, for example, a post-processed picture. Post-processing performed by the post-processing unit 32 may include, for example, color format conversion (for example, from YCbCr to RGB), color correction, trimming, or re-sampling, or any other processing, for example, for preparing the decoded picture data 31 for display, for example, by the display device 34.

The display device 34 is configured to receive the post-processed picture data 33 for displaying the picture, for example, to a user or viewer. The display device 34 may be or include any type of display for representing the reconstructed picture, for example, an integrated or external display or monitor. For example, the display may include a liquid crystal display (liquid crystal display, LCD), an organic light emitting diode (organic light emitting diode, OLED) display, a plasma display, a projector, a micro LED display, liquid crystal on silicon (liquid crystal on silicon, LCoS), a digital light processor (digital light processor, DLP), or any type of other display.

Although FIG. 1A shows the source device 12 and the destination device 14 as separate devices, a device embodiment may alternatively include both the source device 12 and the destination device 14 or functions of both the source device 12 and the destination device 14, namely, the source device 12 or a corresponding function and the destination device 14 or a corresponding function. In these embodiments, the source device 12 or the corresponding function and the destination device 14 or the corresponding function may be implemented by using the same hardware and/or software or by separate hardware and/or software or any combination thereof.

As will be apparent for the skilled person based on the description, the existence and (exact) division into the different units or functions in the source device 12 and/or destination device 14 as shown in FIG. 1A may vary depending on an actual device and application.

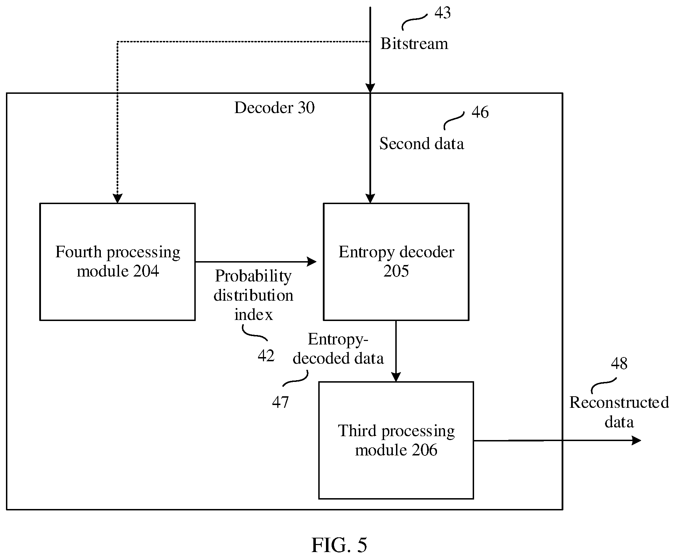

The encoder 20 (for example, the video encoder 20) or the decoder 30 (for example, the video decoder 30) or both the encoder 20 and the decoder 30 may be implemented by a processing circuit as shown in FIG. 1B, such as one or more microprocessors, digital signal processors (digital signal processors, DSPs), application-specific integrated circuits (application-specific integrated circuits, ASICs), field-programmable gate arrays (field-programmable gate arrays, FPGAs), discrete logic, hardware, video coding dedicated processors or any combinations thereof. The encoder 20 may be implemented by a processing circuit 46 to include the various modules described with reference to the encoder 20 in FIG. 2 and/or any other encoder system or subsystem described in this specification. The decoder 30 may be implemented by the processing circuit 46 to include the various modules described with reference to the decoder 30 in FIG. 3 and/or any other decoder system or subsystem described in this specification. The processing circuit 46 may be configured to perform the various operations described below. As shown in FIG. 5, if the technologies are implemented partially in software, a device may store instructions for the software in a suitable non-transitory computer-readable storage medium, and may execute the instructions in hardware by using one or more processors, to perform the technologies in this application. Either of the video encoder 20 and the video decoder 30 may be integrated as part of a combined encoder/decoder (encoder/decoder, CODEC) in a single device, for example, as shown in FIG. 1B.

The source device 12 and the destination device 14 may include any of a wide range of devices, including any type of handheld or stationary devices, for example, notebook or laptop computers, mobile phones, smart phones, tablets or tablet computers, cameras, desktop computers, set-top boxes, televisions, display devices, digital media players, video gaming consoles, video streaming devices (such as content service servers or content delivery servers), broadcast receiver device, broadcast transmitter device, or the like, and may use no or any type of operating system. In some cases, the source device 12 and the destination device 14 may be equipped with components for wireless communication. Therefore, the source device 12 and the destination device 14 may be wireless communication devices.

In some cases, the video coding system 10 shown in FIG. 1A is merely an example and the technologies of this application are applicable to video coding settings (for example, video encoding or video decoding) that do not necessarily include any data communication between an encoding device and a decoding device. In other examples, data is retrieved from a local memory, streamed via a network, or the like. A video encoding device may encode data and store encoded data into the memory, and/or a video decoding device may retrieve data from the memory and decode the data. In some examples, encoding and decoding are performed by devices that do not communicate with each other, but simply encode data to the memory and/or retrieve and decode data from the memory.

FIG. 1B is a block diagram of an example of a video coding system 40 according to an embodiment of this application. As shown in FIG. 1B, the video coding system 40 may include an imaging device 41, the video encoder 20, and the video decoder 30 (and/or a video encoder/decoder implemented by the processing circuit 46), an antenna 42, one or more processors 43, one or more memories 44, and/or a display device 45.

As shown in FIG. 1B, the imaging device 41, the antenna 42, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 42 may be configured to transmit or receive an encoded bitstream of video data. Further, in some examples, the display device 45 may be configured to present the video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be any type of memory, for example, a volatile memory (for example, a static random access memory (static random access memory, SRAM) or a dynamic random access memory (dynamic random access memory, DRAM)) or a nonvolatile memory (for example, a flash memory). In a non-limitative example, the memory 44 may be implemented by a cache memory. In other examples, the processing circuit 46 may include a storage (for example, a cache) for implementing a picture buffer.

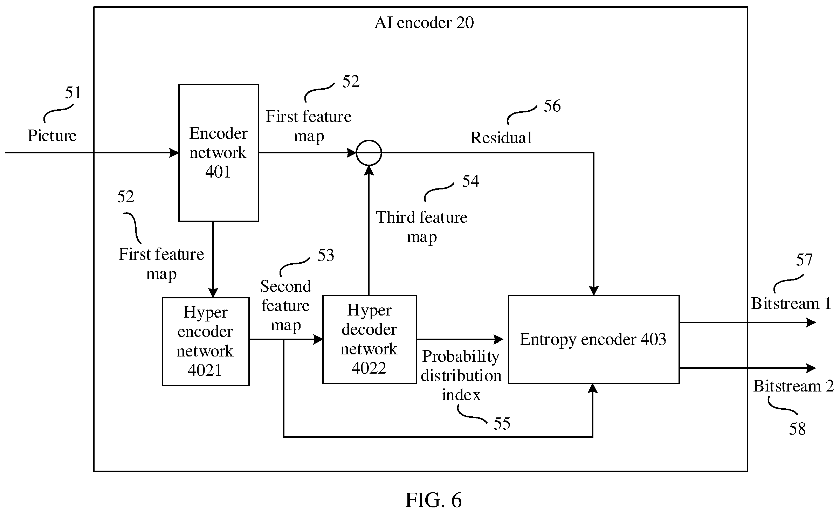

In some examples, the video encoder 20 implemented by the logic circuit may include a picture buffer (which is implemented by, for example, the processing circuit 46 or the memory 44) and a graphics processing unit (which is implemented by, for example, the processing circuit 46). The graphics processing unit may be communicatively coupled to the picture buffer. The graphics processing unit may be included in the video encoder 20 implemented by the processing circuit 46, to implement various modules described with reference to FIG. 2 (or FIG. 4 or FIG. 6) and/or any other encoder system or subsystem described in this specification. The logic circuit may be configured to perform various operations described in this specification.

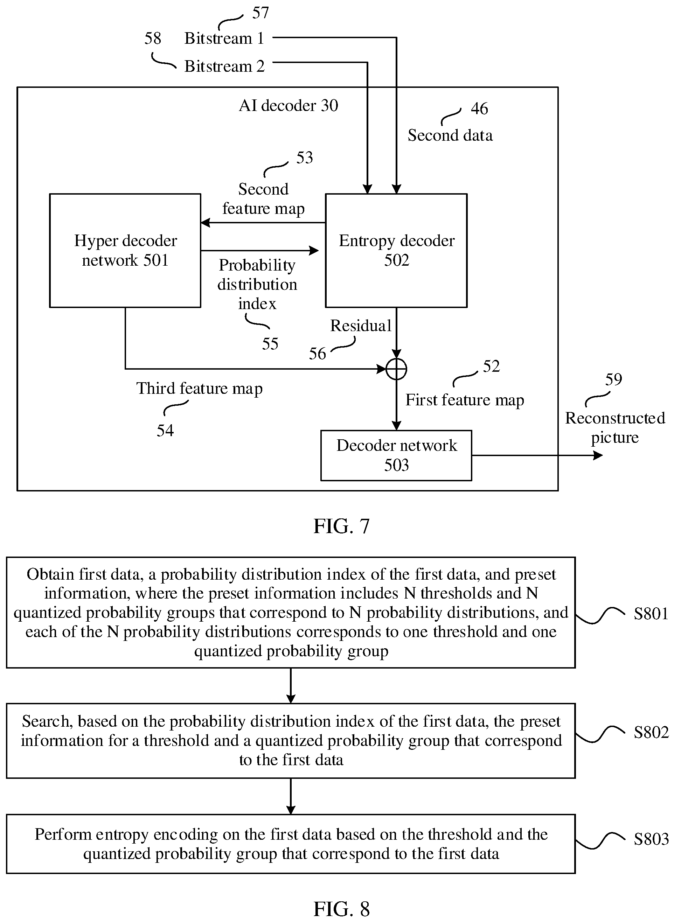

In some examples, the video decoder 30 may be implemented by the processing circuit 46 in a similar manner, to implement various modules described with reference to the video decoder 30 in FIG. 3 (or FIG. 5 or FIG. 7) and/or any other decoder system or subsystem described in this specification. In some examples, the video decoder 30 implemented by the logic circuit may include a picture buffer (which is implemented by the processing circuit 46 or the memory 44) and a graphics processing unit (which is implemented by, for example, the processing circuit 46). The graphics processing unit may be communicatively coupled to the picture buffer. The graphics processing unit may be included in the video decoder 30 implemented by the processing circuit 46, to implement various modules described with reference to FIG. 3 and/or any other decoder system or subsystem described in this specification.

In some examples, the antenna 42 may be configured to receive an encoded bitstream of video data. As described, the encoded bitstream may include data, an indicator, an index value, mode selection data, or the like related to video frame encoding described in this specification, for example, data related to coding partitioning (for example, a transform coefficient or a quantized transform coefficient, an optional indicator (as described), and/or data defining the coding partitioning). The video coding system 40 may further include the video decoder 30 that is coupled to the antenna 42 and that is configured to decode the encoded bitstream. The display device 45 is configured to present a video frame.

It should be understood that in this embodiment of this application, for the example described with reference to the video encoder 20, the video decoder 30 may be configured to perform a reverse process. With regard to a signaling syntax element, the video decoder 30 may be configured to receive and parse such a syntax element and correspondingly decode related video data. In some examples, the video encoder 20 may entropy-encode the syntax element into an encoded video bitstream. In such examples, the video decoder 30 may parse such syntax element and decode the related video data accordingly.

For ease of description, embodiments of this application are described by referring to versatile video coding (versatile video coding, VVC) reference software or high-efficiency video coding (high-efficiency video coding, HEVC) developed by the joint collaboration team on video coding (joint collaboration team on video coding, JCT-VC) of the ITU-T video coding experts group (video coding experts group, VCEG) and the ISO/IEC motion picture experts group (motion picture experts group, MPEG). A person of ordinary skill in the art understands that embodiments of this application are not limited to the HEVC or the VVC.

FIG. 2 is a diagram of an example of an encoder.

Refer to FIG. 2. For example, the encoder 20 may be an entropy encoder 20. The entropy encoder 20 may be configured to: determine, based on a probability distribution index 42, a threshold and a quantized probability group that correspond to first data 41; and then perform entropy encoding on the first data 41 based on the threshold and the quantized probability group that correspond to the first data 41, to obtain a bitstream 43 (an example of the encoded picture data 21).

FIG. 3 is a diagram of an example of a decoder.

Refer to FIG. 3. For example, the decoder 30 may be an entropy decoder 30. The entropy decoder 30 may be configured to: determine, based on a probability distribution index 42, a threshold and a quantized probability group that correspond to second data in a bitstream 43; and then perform entropy decoding on the second data in the bitstream 43 based on the threshold and the quantized probability group that correspond to the second data in the bitstream 43, to obtain entropy-decoded data 44 (an example of the decoded picture data 31).

FIG. 4 is a diagram of an example of a structure of an encoder.

Refer to FIG. 4. For example, the encoder 20 may include a first processing module 201, a second processing module 202, and an entropy encoder 203.

For example, the first processing module 201 may be configured to process raw data 45 (which may be the raw picture data 17 or the preprocessed picture data 19 in FIG. 1A), to obtain first data 41.

For example, the second processing module 202 may be configured to generate a probability distribution index 42 of the first data.

In a possible manner, the raw data 45 may be input into the second processing module 202, and the second processing module 202 processes the raw data 45 to obtain the probability distribution index 42 of the first data.

In a possible manner, prior information (for example, encoded data) may be input into the second processing module 202, and the second processing module 202 processes the prior information to obtain the probability distribution index 42 of the first data.

In a possible manner, a feature of the raw data 45 may be input into the second processing module 202, and the second processing module 202 processes the feature of the raw data 45 to obtain the probability distribution index 42 of the first data.

It should be understood that a manner in which the second processing module 202 generates the probability distribution index 42 of the first data is not limited in this application.

For example, an entropy encoding module 203 may be configured to: determine, based on the probability distribution index 42, a threshold and a quantized probability group that correspond to the first data 41; and then perform entropy encoding on the first data 41 based on the threshold and the quantized probability group that correspond to the first data 41, to obtain a bitstream 43.

FIG. 5 is a diagram of an example of a structure of a decoder.

Refer to FIG. 5. For example, the decoder 30 may include a fourth processing module 204, a third processing module 206, and an entropy decoder 205.

For example, the fourth processing module 204 may be configured to generate a probability distribution index 42 of second data.

In a possible manner, prior information (for example, decoded data) may be input into the fourth processing module 204, and the fourth processing module 204 processes the prior information to obtain the probability distribution index 42 of the second data. In this case, the second processing module 202 in the encoder 20 and the fourth processing module 204 in the decoder 30 may be a same module (or modules with a same function).

In a possible manner, a bitstream may be input into the fourth processing module 204, and the fourth processing module 204 parses the bitstream to obtain the probability distribution index 42 of the second data.

In a possible manner, a bitstream may be input into the entropy decoder 205 to obtain a feature corresponding to the probability distribution index 42 of the second data, the feature corresponding to the probability distribution index 42 of the second data is input into the fourth processing module 204, and the fourth processing module 204 processes the feature to obtain the probability distribution index 42 of the second data.

It should be understood that a manner in which the fourth processing module 204 generates the probability distribution index 42 of the second data is not limited in this application.

For example, the entropy decoder 205 may be configured to: determine, based on the probability distribution index 42, a threshold and a quantized probability group that correspond to the second data 46 in the bitstream 43; and then perform entropy decoding on the second data 46 in the bitstream 43 based on the threshold and the quantized probability group that correspond to the second data 46 in the bitstream 43, to obtain entropy-decoded data 47.

For example, the third processing module 206 may be configured to process the entropy-decoded data 47 to obtain reconstructed data 48 (an example of the decoded picture data 31).

It should be noted that the first processing module 201, the second processing module 202, the third processing module 206, and the fourth processing module 204 may be AI models, or may be conventional probability models. This is not limited in this application.

FIG. 6 is a diagram of an example of a structure of an encoder. The encoder in FIG. 6 is an AI encoder 20.

Refer to FIG. 6. For example, the AI encoder 20 may include an encoder network 401, a hyper encoder network 4021, a hyper decoder network 4022, and an entropy encoder 403. The encoder network 401 is an example of a first processing module 201, and a hyper-prior network is an example of a second processing module 202. The hyper-prior network includes the hyper encoder network 4021 and the hyper decoder network 4022.

Refer to FIG. 6. An encoding process for a picture 51 (an example of the raw data 45) may be as follows.

For example, the picture 51 is input into the encoder network 401, and the encoder network 401 performs feature extraction on the picture 51 to obtain a first feature map 52. Then, the first feature map 52 may be input into the hyper encoder network 4021.

For example, the hyper encoder network 4021 may perform feature extraction on the first feature map 52 to obtain a second feature map 53. On one hand, the second feature map 53 is input into the hyper decoder network 4022, and the hyper decoder network 4022 processes the second feature map 53 to obtain a third feature map 54 and a probability distribution index 55 of the first feature map. On the other hand, the second feature map 53 is input into the entropy encoder 403, and the entropy encoder 403 performs entropy encoding on the second feature map 53 to obtain a bitstream 2 (58).

For example, a difference between the first feature map 52 and the third feature map 54 may be calculated to obtain a residual 56 (an example of first data 41).

For example, the probability distribution index 55 of the first feature map (which may also be referred to as a probability distribution index 55 of the residual) and the residual 56 may be input into the entropy encoder 403. The entropy encoder 403 determines, based on the probability distribution index 55 of the residual, a threshold and a quantized probability group that correspond to the residual 56, and then performs entropy encoding on the residual 56 based on the threshold and the quantized probability group that correspond to the residual 56, to obtain a bitstream 1 (57).

FIG. 7 is a diagram of an example of a structure of a decoder. The decoder in FIG. 7 is an AI decoder.

Refer to FIG. 7. For example, the AI decoder 30 may include a hyper decoder network 501, an entropy decoder 502, and a decoder network 503. The decoder network 503 is an example of a third processing module 206, and the hyper decoder network 401 is an example of a fourth processing module 204. A hyper decoder network 4022 and the hyper decoder network 501 are a same network.

Refer to FIG. 7. A decoding process may be as follows:

For example, a bitstream 1 (57) and a bitstream 2 (58) may be input into the entropy decoder 502. The entropy decoder 502 may perform entropy decoding on the bitstream 2 (58) to obtain a second feature map 53, and input the second feature map 53 into the hyper decoder network 501.

For example, the hyper decoder network 501 may process the second feature map 53 to obtain a probability distribution index 55 of second data and a third feature map 54, and input the probability distribution index 55 of the second data into the entropy decoder 502.

For example, the entropy decoder 502 may determine, based on the probability distribution index 55 of the second data, a threshold and a quantized probability group that correspond to the second data 46 in the bitstream 1 (57); and then perform entropy decoding on the second data 46 in the bitstream 1 (57) based on the threshold and the quantized probability group that correspond to the second data 46 in the bitstream 1 (57), to obtain a residual 56.

For example, the residual 56 may be added to the third feature map 54 to obtain a first feature map 52, and the first feature map 52 is input into the decoder network 503.

For example, the decoder network 503 may perform feature restoration on the first feature map 52 to obtain a reconstructed picture 59 (an example of reconstructed data 48).

The following describes an entropy encoding process and an entropy decoding process.

For example, a plurality of probability distributions may be preset, a corresponding index (index, which may also be referred to as a probability distribution index) is set for each probability distribution, and a corresponding threshold and quantized probability group are calculated for each probability distribution. Then, a relationship among the probability distribution index, the threshold, and the quantized probability group may be established, and the relationship, the threshold, and the quantized probability group form preset information for storage.

For example, it is assumed that a quantity of preset probability distributions is N (N is a positive integer). In this case, N probability distribution indexes may be set for the N probability distributions. For example, the N indexes corresponding to the N probability distributions are 0, 1, 2, ..., and N-1 respectively.

In addition, calculation may be performed based on a type of the reference probability distribution for minimizing a relative entropy, to obtain N thresholds and N quantized probability groups.

For example, for an ith probability distribution, calculation may be performed based on a type of a reference probability distribution for minimizing a relative entropy, to obtain one threshold bound_table_r[i] and one quantized probability group pdf_r[i] that correspond to the ith probability distribution.

It should be noted that the type of the reference probability distribution is not limited in this application.

The following uses an example in which the type of the reference probability distribution is a Gaussian distribution type to describe how to determine the threshold bound_table_r[i] and the quantized probability group pdf_r[i] that correspond to the ith probability distribution.

The reference probability distribution corresponding to the ith probability distribution may be a Gaussian distribution with a mean of 0 and a variance of $\sigma$. A process of determining the threshold and the quantized probability group that correspond to the ith probability distribution is a process of quantizing the reference probability distribution corresponding to the ith probability distribution. Finally, the ith probability distribution (which may also be referred to as an ith quantized probability distribution) may be obtained, where a mean corresponding to the ith probability distribution is 0, and a variance is $\sigma$. Details are as follows:

First, P(x) of each integer x ranging from -16384 to 16383 may be calculated according to Formula (1):

$$P(x) = \frac{erf\left(\dfrac{x+0.5}{\sigma}\right) - erf\left(\dfrac{x-0.5}{\sigma}\right)}{2} \qquad (1)$$

Then, an objective function is minimized. The objective function may be shown in Formula (2):

$$\sum_{j=-(B-1)}^{B-1} P(j) \times \log_2 \frac{256}{Q(j)} + 24 \times \sum_{j=B}^{B+3} P(j) + 50 \times \sum_{j=B+4}^{16383} P(j) \qquad (2)$$

Herein, j is an integer ranging from -16384 to 16383, B is a threshold, Q is a quantized probability group, and both B and Q(j) (Q(j) is a value in the quantized probability group) are positive integers.

For example, a physical meaning of the objective function may be an expectation of a quantity of increased bits of a bitstream after one symbol is encoded in INBOUND+OUTBOUND.

For example, a minimum threshold B (that is, bound_table_r[i]) and a group of quantized probabilities Q (that is, pdf_r[i]) may be obtained by minimizing the objective function.

For example, the quantized probability group pdf_r[i] may include H values, and H may be determined based on a value range corresponding to the ith probability distribution.

For example, the value range corresponding to the ith probability distribution is [-(bound_table_r[i]-1), (bound_table_r[i]-1)], H is a sum of quantities of integers within the value range, an integer within the value range has a step size of M, and M is a positive integer.

The H values in the quantized probability group pdf_r[i] one-to-one correspond to the H integers within the value range.

For example, if bound_table_r[i] is 1, the value range corresponding to the ith probability distribution includes one integer, that is, 0, and the quantized probability group corresponding to the ith probability distribution includes one value (which may be a quantized probability or a numerator of a quantized probability).

For example, if bound_table_r[i] is 2, the value range corresponding to the ith probability distribution is [-1, 1]. If M=1, the value range corresponding to the ith probability distribution may include three integers: -1, 0, and 1; and the quantized probability group corresponding to the ith probability distribution includes three values. If M=2, the value range may include two integers: -1 and 1; and the quantized probability group corresponding to the ith probability distribution includes two values.

It should be noted that, in a process of minimizing the objective function, the quantized probability group Q may be limited as follows:

(1) A quantized probability of the jth value needs to be strictly greater than 0.
(2) A sum of quantized probabilities of the H values within the value range corresponding to the ith probability distribution needs to be equal to 1.
(3) For ease of calculation, a denominator of the quantized probability is usually an integer power of 2.
(4) A quantized probability of a long-tail symbol (or a mark value) is 1/(integer power of 2).

In the foregoing manner, the N thresholds and the N quantized probability groups that correspond to the N probability distributions may be calculated. Relative entropies of n probability distributions in the N probability distributions are optimal relative entropies, where n is an integer ranging from 1 to N, and n is greater than a preset value. The preset value may be a quantity of probability distributions whose relative entropies are optimal relative entropies in N probability distributions in preset information in the conventional technology.

Optimally, n=N. In other words, the relative entropies of the N probability distributions are optimal relative entropies. This can shorten a length of a bitstream obtained through entropy encoding to a maximum extent.

The following shows that when the denominator of the quantized probability is 256, a quantized probability of a corresponding long-tail symbol (or a mark value) in each probability distribution is 1/256, N=35, and n=N, 35 thresholds and 35 quantized probability groups that correspond to 35 probability distributions are respectively as follows:

The 35 thresholds corresponding to the 35 probability distributions are 1, 1, 1, 2, 2, 2, 2, 3, 3, 4, 4, 5, 6, 7, 8, 9, 11, 13, 16, 18, 22, 26, 32, 38, 46, 55, 65, 77, 92, 106, 128, 128, 128, and 128.

It is assumed that a sorting order of integers within a value range corresponding to each probability distribution is as follows: 0, -1, 1, -2, 2, ..., -(bound_table_r[i]-1), and (bound_table_r[i]-1). In this case, the 35 quantized probability groups corresponding to the 35 probability distributions are respectively as follows:

a first quantized probability group includes 255;
a second quantized probability group includes 255;
a third quantized probability group includes 255;
a fourth quantized probability group includes 251, 2, and 2;
a fifth quantized probability group includes 245, 5, and 5;
a sixth quantized probability group includes 231, 12, and 12;
a seventh quantized probability group includes 211, 22, and 22;
an eighth quantized probability group includes 188, 33, and 34;
a ninth quantized probability group includes 157, 48, 48, 1, and 1;
a tenth quantized probability group includes 134, 57, 56, 4, and 4;
an eleventh quantized probability group includes 111, 61, 61, 10, 10, 1, and 1;
a twelfth quantized probability group includes 94, 62, 61, 17, 17, 2, and 2;
a thirteenth quantized probability group includes 77, 58, 58, 24, 24, 6, 6, 1, and 1;
a fourteenth quantized probability group includes 63, 52, 52, 29, 29, 11, 11, 3, 3, 1, and 1;
a fifteenth quantized probability group includes 52, 46, 46, 31, 30, 16, 16, 6, 6, 2, 2, 1, and 1;
a sixteenth quantized probability group includes 43, 39, 39, 30, 30, 19, 19, 10, 10, 5, 5, 2, 2, 1, and 1;
a seventeenth quantized probability group includes 35, 33, 33, 28, 28, 21, 21, 13, 13, 8, 8, 4, 4, 2, 2, 1, and 1;
an eighteenth quantized probability group includes 29, 28, 28, 25, 25, 20, 20, 15, 15, 10, 10, 7, 7, 4, 4, 2, 2, 1, 1, 1, and 1;
a nineteenth quantized probability group includes 24, 23, 23, 21, 21, 19, 18, 15, 15, 12, 12, 9, 9, 6, 6, 4, 4, 3, 3, 2, 2, 1, 1, 1, and 1;
a twentieth quantized probability group includes 19, 19, 19, 18, 18, 17, 17, 15, 15, 12, 12, 10, 10, 8, 8, 6, 6, 4, 4, 3, 3, 2, 2, 1, 1, 1, 1, 1, 1, 1, and 1;
a twenty-first quantized probability group includes 17, 16, 16, 16, 16, 15, 15, 13, 13, 12, 12, 10, 10, 9, 9, 7, 7, 6, 6, 4, 4, 3, 3, 2, 2, 2, 2, 1, 1, 1, 1, 1, 1, 1, and 1;
a twenty-second quantized probability group includes 14, 13, 13, 13, 13, 12, 12, 12, 12, 11, 11, 10, 10, 9, 9, 8, 8, 6, 6, 5, 5, 4, 5, 4, 4, 3, 3, 2, 2, 2, 2, 1, 1, 1, 1, 1, 1, 1, 1, 1, 1, 1, and 1;
a twenty-third quantized probability group includes 11, 11, 11, 11, 11, 10, 10, 10, 10, 10, 10, 9, 9, 8, 8, 7, 7, 7, 7, 6, 6, 5, 5, 5, 5, 4, 4, 3, 3, 3, 3, 2, 2, 2, 2, 2, 2, 1, 1, 1, 1, 1, 1, 1, 1, 1, 1, 1, 1, and 1;
a twenty-fourth quantized probability group includes 9, 9, 9, 9, 9, 9, 9, 8, 8, 8, 8, 8, 8, 7, 7, 7, 7, 6, 6, 6, 6, 5, 5, 5, 5, 4, 4, 4, 4, 4, 4, 3, 3, 3, 3, 2, 2, 2, 2, 2, 2, 2, 2, 1, 1, 1, 1, 1, 1, 1, 1, 1, 1, 1, 1, 1, 1, 1, 1, 1, 1, 1, and 1;
a twenty-fifth quantized probability group includes 7, 7, 7, 7, 7, 7, 7, 7, 7, 7, 7, 7, 7, 6, 6, 6, 6, 6, 6, 5, 5, 5, 5, 5, 5, 5, 4, 4, 4, 4, 4, 4, 3, 3, 3, 3, 3, 3, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, and 1;
a twenty-sixth quantized probability group includes 6, 6, 6, 6, 6, 6, 6, 6, 6, 5, 6, 5, 5, 5, 5, 5, 5, 5, 5, 5, 5, 5, 5, 4, 4, 4, 4, 4, 4, 4, 4, 4, 3, 3, 3, 3, 3, 3, 3, 3, 3, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;
a twenty-seventh quantized probability group includes 5, 5, 5, 5, 5, 5, 5, 5, 5, 4, 4, 4, 4, 4, 4, 4, 4, 4, 4, 4, 4, 4, 4, 4, 4, 4, 4, 4, 3, 3, 3, 3, 3, 3, 3, 3, 3, 3, 3, 3, 3, 3, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;
a twenty-eighth quantized probability group includes 4, 4, 4, 4, 4, 4, 4, 4, 4, 4, 4, 4, 4, 4, 4, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-ninth quantized probability group includes 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirtieth quantized probability group includes 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirty-first quantized probability group includes 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirty-second quantized probability group includes 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirty-third quantized probability group includes 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1;

a thirty-fourth quantized probability group includes 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1; and

a thirty-fifth quantized probability group includes 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1.

For each of a 1st probability distribution, a 2nd probability distribution, and a 3rd probability distribution,

a threshold is 1;
an integer within a value range is 0; and
a quantized probability group includes one value: 255.

In other words, a numerator of a quantized probability corresponding to the integer 0 is 255.
For a 4th probability distribution,

a threshold is 2;
integers within a value range are 0, -1, and 1; and
a quantized probability group includes three values: 251, 2, and 2.

In other words, a numerator of a quantized probability corresponding to the integer 0 is 251, a numerator of a quantized probability corresponding to the integer -1 is 2, and a numerator of a quantized probability corresponding to the integer 1 is 2.
The rest may be deduced by analogy. Details are not described herein again.
It can be seen from the foregoing 35 thresholds and 35 quantized probability groups that a 32nd probability distribution to a 35th probability distribution have a same threshold and a same quantized probability group. Therefore, the 35 probability distributions may be reduced to 32 probability distributions (the 33rd probability distribution to the 35th probability distribution are removed), and the 33rd distribution to the 35th distribution are all replaced with the 32nd distribution. 32 thresholds and 32 quantized probability groups that correspond to the 32 probability distributions form preset information. In this case, N=32.

The preset information may be represented in the following form:

bound_table_r=[1, 1, 1, 2, 2, 2, 2, 2, 3, 3, 4, 4, 5, 6, 7, 8, 9, 11, 13, 16, 18, 22, 26, 32, 38, 46, 55, 65, 77, 92, 106, 128]

```
            pdf_r=[[255], [255], [255], [251, 2, 2], [245, 5, 5],
[231, 12, 12], [211, 22, 22], [188, 33, 34], [157, 48, 48,
1, 1], [134, 57, 56, 4, 4], [111, 61, 61, 10, 10, 1, 1],
[94, 62, 61, 17, 17, 2, 2], [77, 58, 58, 24, 24, 6, 6, 1, 1], [63, 52,
52, 29, 29, 11, 11, 3, 3, 1, 1], [52, 46, 46, 31, 30, 16, 16, 6,
6, 2, 2, 1, 1], [43, 39, 39, 30, 30, 19, 19, 10, 10, 5, 5, 2, 2,
1, 1], [35, 33, 33, 28, 28, 21, 21, 13, 13, 8, 8, 4, 4, 2, 2, 1, 1],
[29, 28, 28, 25, 25, 20, 20, 15, 15, 10, 10, 7, 7, 4, 4, 2, 2,
1, 1, 1, 1], [24, 23, 23, 21, 21, 19, 18, 15, 15, 12, 12, 9, 9, 6, 6, 4,
 4, 3, 3, 2, 2, 1, 1, 1, 1], [19, 19, 19, 18, 18, 17, 17,
15, 15, 12, 12, 10, 10, 8, 8, 6, 6, 4, 4, 3, 3, 2, 2, 1,
1, 1, 1, 1, 1, 1, 1], [17, 16, 16, 16, 16, 15, 15, 13, 13, 12, 12, 10, 10,
9, 9, 7, 7, 6, 6, 4, 4, 3, 3, 2, 2, 2, 2, 1, 1, 1, 1, 1, 1, 1,
1], [14, 13, 13, 13, 13, 12, 12, 12, 12, 11, 11, 10, 10, 9, 9, 8, 8, 6,
6, 5, 5, 4, 5, 4, 4, 3, 3, 2, 2, 2, 2, 1, 1, 1, 1, 1, 1, 1, 1,
 1, 1, 1], [11, 11, 11, 11, 11, 10, 10, 10, 10, 10, 10, 9, 9, 8, 8, 7,
7, 7, 7, 6, 6, 5, 5, 5, 5, 4, 4, 3, 3, 3, 3, 2, 2, 2, 2, 2,
2, 1, 1, 1, 1, 1, 1, 1, 1, 1, 1, 1, 1], [9, 9, 9, 9, 9, 9, 9, 8, 8, 8, 8,
8, 8, 7, 7, 7, 6, 6, 6, 5, 5, 5, 4, 4, 4, 4, 4, 4,
3, 3, 3, 3, 2, 2, 2, 2, 2, 2, 2, 1, 1, 1, 1, 1, 1, 1, 1, 1, 1, 1, 1, 1, 1, 1, 1,
1, 1, 1, 1, 1],[7, 7, 7, 7, 7, 7, 7, 7, 7, 7, 7, 7, 7, 6, 6,
 6, 6, 6, 6, 5,5,5,5,5,5,5,4,4,4,4, 4,4, 3, 3, 3, 3, 3, 3, 2, 2,
2, 2, 2, 2, 2, 2, 1, 1, 1, 1, 1, 1, 1, 1, 1, 1, 1, 1,
1, 1, 1, 1, 1, 1, 1, 1, 1, 1, 1, 1, 1, 1], [6, 6, 6, 6, 6, 6, 6, 6, 6, 5, 6, 5,
5, 5, 5, 5, 5, 5, 5, 5, 5, 5, 4, 4, 4, 4, 4, 4, 4, 4,
4, 3, 3, 3, 3, 3, 3, 3, 3, 3, 3, 2, 2, 2, 2, 2, 2, 2, 2, 2, 2, 2, 1, 1, 1, 1,
1, 1, 1, 1, 1, 1, 1, 1, 1, 1, 1, 1, 1, 1, 1, 1, 1, 1,
1, 1, 1, 1, 1, 1, 1, 1, 1, 1, 1, 1], [5, 5, 5, 5, 5, 5, 5, 5, 5, 4, 4, 4, 4, 4,
4, 4, 4, 4, 4, 4, 4, 4, 4, 4, 4, 4, 4, 4, 4, 4, 3, 3, 3,
3, 3, 3, 3, 3, 3, 3, 3, 3, 2, 2, 2, 2, 2, 2, 2, 2, 2, 2, 2, 2, 2, 2, 2,
1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1,
1], [4, 4, 4, 4, 4, 4, 4, 4, 4, 4, 4, 4, 4, 4, 4, 4, 3, 3, 3,
 3, 3, 3, 3, 3, 3, 3, 3, 3, 3, 3, 3, 3, 3, 3, 3, 3, 3, 3, 3, 3, 3, 2, 2,
2, 2, 2, 2, 2, 2, 2, 2, 2, 2, 2, 2, 2, 2, 2, 2, 2, 2,
2, 2, 1, 1, 1, 1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1], [3, 3, 3, 3, 3, 3, 3, 3, 3,
3, 3, 3, 3, 3, 3, 3, 3, 3, 3, 3, 3, 3, 3, 3, 3, 3, 3, 3,
3, 3, 3, 3, 2, 2, 2, 2, 2, 2, 2, 2, 2, 2, 2, 2, 2, 2, 2, 2, 2, 2, 2, 2, 2, 2,
2, 2, 2, 2, 2, 2, 2, 2, 2, 2, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1,
1, 1, 1], [2, 2, 2, 2, 2, 2, 2, 2, 2, 2, 2, 2, 2, 2, 2, 2,
2, 2, 2, 2, 2, 2, 2, 2, 2, 2, 2, 2, 2, 2, 2, 2, 2, 2, 2, 2, 2, 2, 2, 2, 2, 2,
2, 2, 2, 2, 2, 2, 2, 2, 2, 2, 2, 2, 2, 2, 2, 2, 2, 2,
2, 2, 2, 2, 2, 2, 2, 2, 2, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1, 1, 1, 1],
[2, 2, 2, 2, 2, 2, 2, 2, 2, 2, 2, 2, 2, 2, 2, 2, 2, 2, 2, 2,
2, 2, 2, 2, 2, 2, 2, 2, 2, 2, 2, 2, 2, 2, 2, 2, 2, 2, 2, 2, 2, 2, 2, 1, 1, 1,
1, 1, 1, 1, 1, 1, 1, 1, 1, 1, 1, 1, 1, 1, 1, 1, 1, 1, 1,
 1, 1, 1, 1, 1, 1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1,
 1, 1, 1, 1, 1, 1, 1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1, 1, 1,
1, 1], [1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1,
```

```
1, 1, 1, 1, 1, 1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1, 1, 1]]
```

bound_table_r represents an array used to store the thresholds, bound_table_r[i] represents the threshold corresponding to the i$^{th}$ probability distribution, pdf_r represents an array used to store the quantized probability groups, pdf_r[i] represents the quantized probability group corresponding to the i$^{th}$ probability distribution, and i is the probability distribution index.

Another type of preset information may be as follows:

bound_table_r=[1, 1, 2, 2, 2, 2, 2, 2, 3, 3, 4, 5, 5, 6, 8, 9, 11, 13, 15, 18, 21, 25, 30, 36, 43, 51, 60, 71, 85, 100, 118, 128]

```
        pdf_r=[[255], [255], [253, 1, 1], [251, 2, 2], [245, 5, 5],
[231, 12, 12], [211, 22, 22], [188, 33, 34], [157,
        48, 48, 1, 1], [134, 57, 56, 4, 41, [107, 61, 61, 12, 12, 1, 1],
[89, 60, 60, 19, 19, 3, 3, 1, 1], [74, 56, 57, 26, 26, 7, 7, 1,
        1], [61, 51, 51, 30, 30, 12, 12, 3, 3, 1, 1], [49, 44, 44, 31,
 31, 17, 17, 7, 7, 2, 2, 1, 1, 1, 1], [41, 37, 38, 30, 29, 20, 20,
        11, 11, 5, 5, 2, 2, 1, 1, 1, 1], [33, 32, 32, 27, 27, 20, 20,
14, 14, 8, 8, 5, 5, 2, 2, 1, 1, 1, 1, 1, 1], [27, 27, 26, 23, 24, 20,
        20, 15, 15, 11, 11, 7, 7, 4, 4, 3, 3, 1, 1, 1, 1, 1, 1, 1, 1],
[22, 22, 21, 20, 20, 18, 18, 15, 15, 12, 12, 9, 9, 7, 7, 5, 5, 3, 3,
        2, 2, 1, 1, 1, 1, 1, 1, 1, 11, [19, 18, 18, 17, 17, 16, 16, 14,
14, 12, 12, 10, 10, 8, 8, 6, 6, 5, 5, 3, 3, 2, 2, 2, 2, 1, 1, 1, 1, 1,
        1, 1, 1, 1], [15, 15, 15, 14, 14, 13, 14, 13, 12, 11, 11, 10,
10, 9, 9, 7, 7, 6, 6, 5, 5, 4, 4, 3, 3, 2, 2, 2, 2, 1, 1, 1, 1, 1, 1,
        1, 1, 1, 1, 1, 1], [13, 12, 12, 12, 12, 11, 11, 11, 11, 10, 10,
9, 9, 8, 8, 8, 8, 7, 7, 6, 6, 5, 5, 4, 4, 3, 3, 3, 3, 2, 2, 2, 2, 1, 1,
        1, 1, 1, 1, 1, 1, 1, 1, 1, 1, 1, 1], [10, 9, 10, 10, 10,
9, 9, 9, 9, 9, 9, 8, 8, 8, 8, 7, 7, 7, 7, 6, 6, 5, 5, 5, 5, 4, 4, 4, 4, 3,
        3, 3, 3, 2, 2, 2, 2, 2, 2, 1, 1, 1, 1, 1, 1, 1, 1, 1, 1,
1, 1, 1, 1, 1, 1], [8, 7, 8, 8, 8, 8, 8, 8, 8, 7, 7, 7, 7, 7, 7, 6, 6,
        6, 6, 6, 6, 5, 5, 5, 5, 5, 5, 4, 4, 4, 4, 3, 3, 3, 3, 3, 3, 2,
2, 2, 2, 2, 2, 2, 1, 1, 1, 1, 1, 1, 1, 1, 1, 1, 1, 1, 1, 1, 1, 1, 1, 1,
        1, 1, 1, 1, 1, 1, 11, [7, 6, 7, 6, 7, 6, 6, 6, 6, 6, 6, 6, 6,
6, 6, 6, 6, 5, 5, 5, 5, 5, 5, 5, 5, 4, 4, 4, 4, 4, 4, 4, 3, 3, 3, 3, 3, 3,
        3, 3, 2, 2, 2, 2, 2, 2, 2, 2, 2, 2, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1]],
        [5, 5, 5, 5, 5, 5, 5, 5, 5, 5, 5, 5, 5, 5, 4,
4, 4, 4, 4, 4, 4, 4, 4, 4, 4, 4, 3, 3, 3, 3, 3, 3, 3, 3, 3, 3, 3, 3, 2, 2,
        2, 2, 2, 2, 2, 2, 2, 2, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1, 1, 1,
        1, 1, 1, 1, 1, 1, 1], [4, 4, 4, 4, 4, 4, 4, 4, 4, 4, 4, 4, 4,
4, 4, 4, 4, 4, 4, 4, 4, 4, 4, 4, 4, 3, 3, 3, 3, 3, 3, 3, 3, 3, 3, 3,
        3, 3, 3, 3, 3, 3, 2, 2, 2, 2, 2, 2, 2, 2, 2, 2, 2, 2,
2, 2, 2, 2, 2, 1, 1, 1, 1, 1, 1, 1, 1, 1, 1, 1, 1, 1, 1, 1, 1, 1, 1, 1, 1, 1,
        1, 1, 1, 1, 1, 1, 1, 1, 1, 1, 1, 1, 1], [4, 3, 4, 3, 4, 3, 3, 3, 3, 3, 3, 3, 3,
3, 3, 3, 3, 3, 3, 3, 3, 3, 3, 3, 3, 3, 3, 3, 3, 3, 3, 3, 3, 3,
        3, 3, 3, 3, 3, 3, 3, 3, 2, 2, 2, 2, 2, 2, 2, 2, 2, 2, 2, 2, 2, 2, 2, 2,
2, 2, 2, 2, 2, 2, 2, 1, 1, 1, 1, 1, 1, 1, 1, 1, 1, 1,
        1, 1, 1, 1, 1, 1, 1, 1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1,
        1, 1, 1, 1, 1, 1, 1, 1, 1, 1, 1, 1, 1, 1, 1, 1, 1, 1, 1, 1], [3, 2, 3, 2, 3, 2, 3, 2, 3, 2, 3, 2,
        3, 3, 2, 3, 3, 2, 3, 3, 3, 2, 3, 3, 2, 2, 2, 2, 2, 2, 2, 2,
2, 2, 2, 2, 2, 2, 2, 2, 2, 2, 2, 2, 2, 2, 2, 2, 2, 2, 2, 2, 2, 2, 2, 2, 2, 2,
        2, 2, 2, 2, 2, 2, 2, 2, 2, 2, 2, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1, 1, 1,
        1, 1, 1, 1, 1, 1, 1, 1, 1, 1, 1, 1, 1, 1, 1, 1, 1, 1, 1,
1, 1, 1, 1, 1, 1, 1, 1, 1, 1, 1, 1, 1, 1, 1, 1, 1, 1, 1, 1, 1, 1, 1, 1, 1, 1,
        1, 1, 1, 1, 1, 1, 1, 1, 1, 1, 1, 1, 1, 1, 1, 1], [2, 1, 2,
1, 2, 1, 2, 1, 2, 1, 2, 1, 2, 1, 2, 1, 2, 1, 2, 2, 2, 2, 2, 2, 2, 2, 2, 2, 2,
        2, 2, 2, 2, 2, 2, 2, 2, 2, 2, 2, 2, 2, 2, 2, 2, 2, 2, 2,
 2, 2, 2, 2, 2, 2, 2, 2, 2, 2, 2, 2, 2, 2, 2, 1, 1, 1, 1, 1, 1, 1, 1, 1, 1, 1, 1,
```

```
      1, 1, 1, 1, 1, 1, 1, 1, 1, 1, 1, 1, 1, 1, 1, 1, 1, 1, 1, 1,
  1, 1, 1, 1, 1, 1, 1, 1, 1, 1, 1, 1, 1, 1, 1, 1, 1, 1, 1, 1, 1, 1, 1, 1,
      1, 1, 1, 1, 1, 1, 1, 1, 1, 1, 1, 1, 1, 1, 1, 1, 1, 1, 1, 1,
  1, 1, 1, 1, 1, 1, 1, 1, 1, 1, 1, 1, 1, 1, 1, 1, 1, 1, 1, 1, 1, 1, 1, 1, 1,
      1, 1, 1, 1, 1, 1, 1, 1, 1, 1, 1, 1, 1, 1, 1, 1, 1, 1, 1,
  1, 1, 1, 1, 1, 1, 1, 1], [2, 1, 2, 1, 2, 1, 2, 1, 2, 1, 2, 1, 2, 1, 2, 1, 2, 1,
      2, 1, 2, 2, 1, 2, 1, 2, 2, 1, 2, 1, 2, 2, 2, 1, 2, 1, 1, 1,
  1, 1, 1, 1, 1, 1, 1, 1, 1, 1, 1, 1, 1, 1, 1, 1, 1, 1, 1, 1, 1, 1, 1, 1, 1,
      1, 1, 1, 1, 1, 1, 1, 1, 1, 1, 1, 1, 1, 1, 1, 1, 1, 1, 1,
  1, 1, 1, 1, 1, 1, 1, 1, 1, 1, 1, 1, 1, 1, 1, 1, 1, 1, 1, 1, 1, 1, 1, 1, 1,
      1, 1, 1, 1, 1, 1, 1, 1, 1, 1, 1, 1, 1, 1, 1, 1, 1, 1, 1,
  1, 1, 1, 1, 1, 1, 1, 1, 1, 1, 1, 1, 1, 1, 1, 1, 1, 1, 1, 1, 1, 1, 1, 1, 1,
      1, 1, 1, 1, 1, 1, 1, 1, 1, 1, 1, 1, 1, 1, 1, 1, 1, 1, 1,
  1, 1, 1, 1, 1, 1, 1, 1, 1, 1, 1, 1, 1, 1, 1, 1, 1, 1, 1, 1, 1, 1, 1, 1, 1,
      1,1, 1, 1, 1, 1, 1, 1, 1, 1, 1, 1, 1, 1, 1, 1, 1, 1, 1,
  1, 1, 1, 1, 1, 1, 1, 1, 1], [1, 1, 1, 1, 1, 1, 1, 1, 1, 1, 1, 1, 1, 1, 1, 1, 1,
      1, 1, 1, 1, 1, 1, 1, 1, 1, 1, 1, 1, 1, 1, 1, 1, 1, 1, 1,
  1, 1, 1, 1, 1, 1, 1, 1, 1, 1, 1, 1, 1, 1, 1, 1, 1, 1, 1, 1, 1, 1, 1, 1, 1,
      1, 1, 1, 1, 1, 1, 1, 1, 1, 1, 1, 1, 1, 1, 1, 1, 1, 1, 1,
  1, 1, 1, 1, 1, 1, 1, 1, 1, 1, 1, 1, 1, 1, 1, 1, 1, 1, 1, 1, 1, 1, 1, 1, 1,
      1, 1, 1, 1, 1, 1, 1, 1, 1, 1, 1, 1, 1, 1, 1, 1, 1, 1, 1,
  1, 1, 1, 1, 1, 1, 1, 1, 1, 1, 1, 1, 1, 1, 1, 1, 1, 1, 1, 1, 1, 1, 1, 1, 1,
      1, 1, 1, 1, 1, 1, 1, 1, 1, 1, 1, 1, 1, 1, 1, 1, 1, 1, 1,
  1, 1, 1, 1, 1, 1, 1, 1, 1, 1, 1, 1, 1, 1, 1, 1, 1, 1, 1, 1, 1, 1, 1, 1, 1,
      1, 1, 1, 1, 1, 1, 1, 1, 1, 1, 1, 1, 1, 1, 1, 1, 1, 1, 1,
  1, 1, 1]]
```

This can reduce redundancy of the preset information, reduce memory occupied by the preset information, and further reduce bits required for representing the probability distribution index.

It should be understood that a sorting order of the N quantized probability groups is not limited in this application, and a sorting order of the N thresholds is not limited in this application. A location of an $i^{th}$ threshold corresponding to the $i^{th}$ probability distribution in the N thresholds is the same as a location of an $i^{th}$ quantized probability group corresponding to the $i^{th}$ probability distribution in the N quantized probability groups.

It should be understood that a sorting order of a plurality of values in any quantized probability group is not limited in this application.

It should be noted that, in the quantized probability group corresponding to the $i^{th}$ probability distribution, if a $c^{th}$ value "X1" corresponds to an integer "A" within the value range corresponding to the $i^{th}$ probability distribution, and a $g^{th}$ value "X2" corresponds to an integer "-A" within the value range corresponding to the $i^{th}$ probability distribution, the $c^{th}$ value "X1" in the quantized probability group corresponding to the $i^{th}$ probability distribution may be replaced with "X2", and the $g^{th}$ value "X2" in the quantized probability group corresponding to the $i^{th}$ probability distribution may be replaced with "X1". c and g are positive integers less than H, and c is not equal to g.

For example, it is assumed that the tenth quantized probability group includes 134, 57, 56, 4, and 4. If an integer corresponding to "57" is "-1", and an integer corresponding to "56" is "1", the tenth quantized probability group may be updated to 134, 56, 57, 4, and 4.

It should be understood that N may be another value, for example, N=16. In this case, 16 thresholds may be selected from the foregoing 32 thresholds, and 16 quantized probability groups corresponding to the foregoing selected 16 thresholds may be selected from the 32 quantized probability groups, to form the preset information. That is, a value of N is not limited in this application.

It should be understood that M may be other data, for example, M=1 or 2. This is not limited in this application.

It should be understood that the denominator of the quantized probability corresponding to the quantized probability group may be other data, for example, 512. In this case, a numerator of each quantized probability in the foregoing 32 quantized probability groups may be doubled, to obtain another quantized probability group. That is, a value of the denominator of the quantized probability corresponding to the quantized probability group is not limited in this application.

The foregoing step of establishing the preset information may be performed by an entropy encoder.

FIG. 8 is a flowchart of an example of an entropy encoding process. The entropy encoding process in FIG. 8 may be performed by an entropy encoder.

S801: Obtain first data, a probability distribution index of the first data, and preset information, where the preset information includes N thresholds and N quantized probability groups that correspond to N probability distributions, and each of the N probability distributions corresponds to one threshold and one quantized probability group.

In a possible manner, the first data may be raw data 45 input into an encoder 20.

In a possible manner, the first data may be data obtained by processing the raw data 45 input into the encoder 20.

For example, the first data may include a plurality of symbols (symbols). For example, one symbol may be a pixel value of a pixel or a feature value of a pixel value in a picture. For another example, one symbol may be an amplitude of a frequency in an audio frame.

S802: Search, based on the probability distribution index of the first data, the preset information for a threshold and a quantized probability group that correspond to the first data.

For example, based on the preset information shown above, it is assumed that the probability distribution index of the first data is 11, an array of thresholds is searched for bound_table_r[11]=4, and an array of quantized probability groups may be searched for pdf_r[11]=[134, 57, 56, 4, 4].

S803: Perform entropy encoding on the first data based on the threshold and the quantized probability group that correspond to the first data.

For example, S803 may include the following substeps:

S8031: Determine whether an absolute value of a to-be-entropy-encoded symbol is less than a threshold corresponding to the to-be-entropy-encoded symbol.

S8032: When the absolute value of the to-be-entropy-encoded symbol is greater than or equal to the threshold corresponding to the to-be-entropy-encoded symbol, perform entropy encoding on the to-be-entropy-encoded symbol according to a first entropy encoding algorithm; update the to-be-entropy-encoded symbol to a mark value; and perform entropy encoding on an updated to-be-entropy-encoded symbol according to a second entropy encoding algorithm and based on a quantized probability group corresponding to the to-be-entropy-encoded symbol.

For example, it is assumed that a probability distribution index of the to-be-entropy-encoded symbol is 11, the threshold corresponding to the to-be-entropy-encoded symbol is bound_table_r[11]=4, and the quantized probability group corresponding to the to-be-entropy-encoded symbol is pdf_r[11]=[134, 57, 56, 4, 4]. If the to-be-entropy-encoded symbol is 5, entropy encoding may be performed on "5" according to the first entropy encoding algorithm. Next, the to-be-entropy-encoded symbol "5" is updated to the mark value (for example, - bound_table_r[11]=-4). Then, entropy encoding may be performed on an updated to-be-entropy-encoded symbol "-4" according to the second entropy encoding algorithm and based on the quantized probability group pdf_r[11]=[134, 57, 56, 4, 4] corresponding to the to-be-entropy-encoded symbol.

For example, the first entropy encoding algorithm may be an OUTBOUND algorithm, and the second entropy encoding algorithm may be an INBOUND algorithm. It should be understood that the first entropy encoding algorithm and the second entropy encoding algorithm are not limited in this application.

S8033: When the absolute value of the to-be-entropy-encoded symbol is less than the threshold corresponding to the to-be-entropy-encoded symbol, perform entropy encoding on the to-be-entropy-encoded symbol according to a second entropy encoding algorithm and based on a quantized probability group corresponding to the to-be-entropy-encoded symbol.

For example, it is assumed that a probability distribution index of the to-be-entropy-encoded symbol is 11, the threshold corresponding to the to-be-entropy-encoded symbol is bound_table_r[11]=4, and the quantized probability group corresponding to the to-be-entropy-encoded symbol is pdf_r[11]=[134, 57, 56, 4, 4]. If the to-be-entropy-encoded symbol is 3, entropy encoding may be performed on the to-be-entropy-encoded symbol "3" according to the second entropy encoding algorithm and based on the quantized probability group pdf_r[11]=[134, 57, 56, 4, 4] corresponding to the to-be-entropy-encoded symbol.

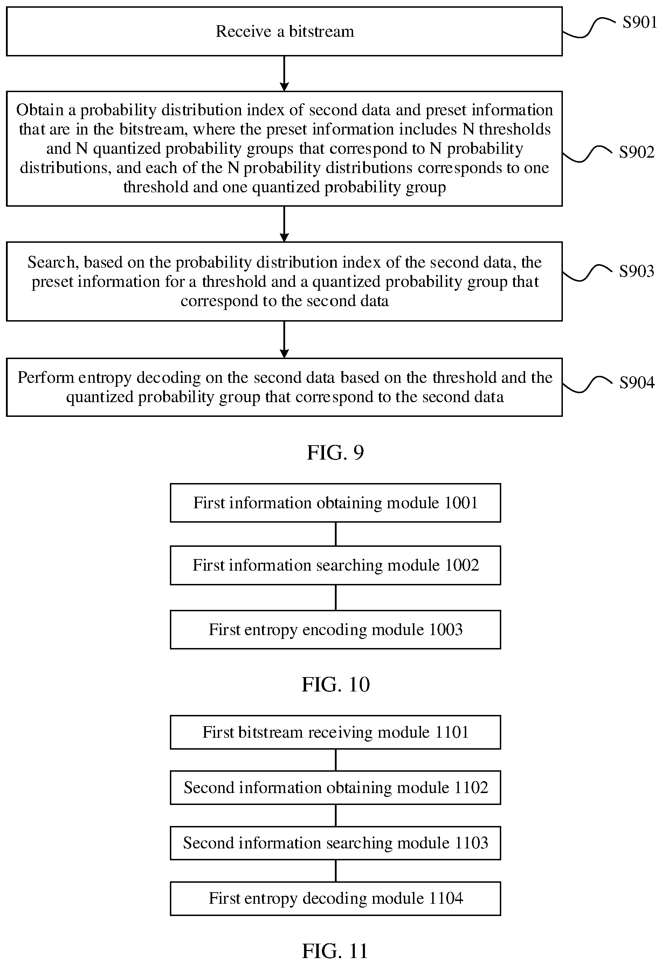

FIG. 9 is a flowchart of an example of an entropy decoding process. The entropy decoding process in FIG. 9 may be performed by an entropy decoder.

S901: Receive a bitstream.

S902: Obtain a probability distribution index of second data and preset information that are in the bitstream, where the preset information includes N thresholds and N quantized probability groups that correspond to N probability distributions, and each of the N probability distributions corresponds to one threshold and one quantized probability group.

For example, the second data in the bitstream may be data obtained by performing entropy encoding on first data.

S903: Search, based on the probability distribution index of the second data, the preset information for a threshold and a quantized probability group that correspond to the second data.

For example, for S903, refer to the descriptions of S802 above. Details are not described herein again.

S904: Perform entropy decoding on the second data based on the threshold corresponding to the first data and the quantized probability group corresponding to the first data.

For example, S904 may include the following substeps:

S9041: Perform entropy decoding on a to-be-entropy-decoded symbol according to a second entropy decoding algorithm and based on a quantized probability group corresponding to the to-be-entropy-decoded symbol in the second data, to obtain an entropy-decoded symbol.

S9042: Determine whether the entropy-decoded symbol is a mark value.

S9043: When the entropy-decoded symbol is the mark value, perform entropy decoding on the entropy-decoded symbol according to a first entropy decoding algorithm, and update the entropy-decoded data to a result obtained by performing entropy decoding according to the first entropy decoding algorithm.

For example, it is assumed that a probability distribution index of the to-be-entropy-decoded symbol is 11, the threshold corresponding to the second data is bound_table_r[11]=4, and the quantized probability group corresponding to the second data is pdf_r[11]=[134, 57, 56, 4, 4]. If entropy decoding is performed on the to-be-entropy-decoded symbol according to the second entropy decoding algorithm and based on the quantized probability group corresponding to the to-be-entropy-decoded symbol, the obtained entropy-decoded symbol is -4. Because "-4" is the mark value, entropy decoding may be performed on the entropy-decoded symbol "-4" according to the first entropy decoding algorithm, to obtain "5".

The entropy encoding and decoding method in this application and an entropy encoding and decoding method in the conventional technology are tested by using same data, and obtained results are shown in Table 1 and Table 2.

Table 1

|  | Code length loss |
|---|---|
| Entropy encoding method in the conventional technology | 0.6% |
| Entropy encoding method in this application | 0.5% |

In Table 1, in the first row, an average length of a bitstream obtained by using the entropy encoding method in the conventional technology is 0.6% greater than a theoretical optimal value; and

in the second row, an average length of a bitstream obtained by using the entropy encoding method in the technology of this application is 0.5% greater than the theoretical optimal value.

It can be seen from Table 1 that, when entropy encoding is performed on the same data, a length of the bitstream obtained through entropy encoding in this application is smaller.

Table 2

| Model | Code length loss obtained by using an entropy encoding method in the conventional technology | Code length loss obtained by using an entropy encoding method in this application |
|---|---|---|
| Model 1 | 0.67% | 0.46% |
| Model 2 | 0.62% | 0.40% |
| Model 3 | 0.60% | 0.40% |
| Model 4 | 0.52% | 0.31% |
| Model 5 | 0.33% | 0.17% |
| Model 6 | 0.68% | 0.45% |
| Model 7 | 0.55% | 0.34% |
| Model 8 | 0.53% | 0.33% |
| Model 9 | 0.59% | 0.40% |
| Model 10 | 0.45% | 0.29% |

In Table 2, a length of a bitstream obtained by performing entropy encoding based on a threshold table and a quantized probability group in the conventional technology via the model 1 is 0.67% greater than a theoretical optimal value; a length of a bitstream obtained by performing entropy encoding based on the threshold table and the quantized probability group in the conventional technology via the model 2 is 0.62% greater than the theoretical optimal value; ...; and the rest may be deduced by analogy.

In Table 2, a length of a bitstream obtained by performing entropy encoding based on a threshold table and a quantized probability group in this application via the model 1 is 0.46% greater than a theoretical optimal value; a length of a bitstream obtained by performing entropy encoding based on the threshold table and the quantized probability group in this application via the model 2 is 0.40% greater than the theoretical optimal value; ...; and the rest may be deduced by analogy.

It can be seen from Table 2 that, for the same data, regardless of a model used for entropy encoding, the length of the bitstream obtained through entropy encoding in this application is smaller.

FIG. 10 is a diagram of an example of an entropy encoding apparatus. The entropy encoding apparatus may be configured to perform the method in the foregoing embodiment. Therefore, for beneficial effect that can be achieved by the entropy encoding apparatus, refer to the beneficial effect of the corresponding method provided above. Details are not described herein again.

Refer to FIG. 10. The entropy encoding apparatus includes:

a first information obtaining module 1001, configured to obtain first data, a probability distribution index of the first data, and preset information, where the preset information includes N thresholds and N quantized probability groups that correspond to N probability distributions, each of the N probability distributions corresponds to one threshold and one quantized probability group, relative entropies of n probability distributions in the N probability distributions are optimal relative entropies, a relative entropy of a first probability distribution represents a distance between a reference probability distribution corresponding to the first probability distribution and the first probability distribution, the first probability distribution is any one of the n probability distributions, N is a positive integer, n is an integer ranging from 1 to N, n is greater than a preset value, and each of the N probability distributions corresponds to one probability distribution index;

a first information searching module 1002, configured to search, based on the probability distribution index of the first data, the preset information for a threshold and a quantized probability group that correspond to the first data; and

a first entropy encoding module 1003, configured to perform entropy encoding on the first data based on the threshold and the quantized probability group that correspond to the first data.

In addition, the entropy encoding apparatus may further include a module configured to generate the preset information.

FIG. 11 is a diagram of an example of an entropy decoding apparatus. The entropy decoding apparatus may be configured to perform the method in the foregoing embodiment. Therefore, for beneficial effect that can be achieved by the entropy decoding apparatus, refer to the beneficial effect of the corresponding method provided above. Details are not described herein again.

Refer to FIG. 11. The entropy decoding apparatus includes:

a first bitstream receiving module 1101, configured to receive a bitstream;

a second information obtaining module 1102, configured to obtain a probability distribution index of second data and preset information that are in the bitstream, where the preset information includes N thresholds and N quantized probability groups that correspond to N probability distributions, each of the N probability distributions corresponds to one threshold and one quantized probability group, relative entropies of n probability distributions in the N probability distributions are optimal relative entropies, a relative entropy of a first probability distribution represents a distance between a reference probability distribution corresponding to the first probability distribution and the first probability distribution, the first probability distribution is any one of the n probability distributions, N is a positive integer, n is an integer ranging from 1 to N, n is greater than a preset value, and each of the N probability distributions corresponds to one probability distribution index;

a second information searching module 1103, configured to search, based on the probability distribution index of the second data, the preset information for a threshold and a quantized probability group that correspond to the second data; and

a first entropy decoding module 1104, configured to perform entropy decoding on the second data based on the threshold and the quantized probability group that correspond to the second data.

In addition, the entropy decoding apparatus may further include a module configured to generate the preset information.

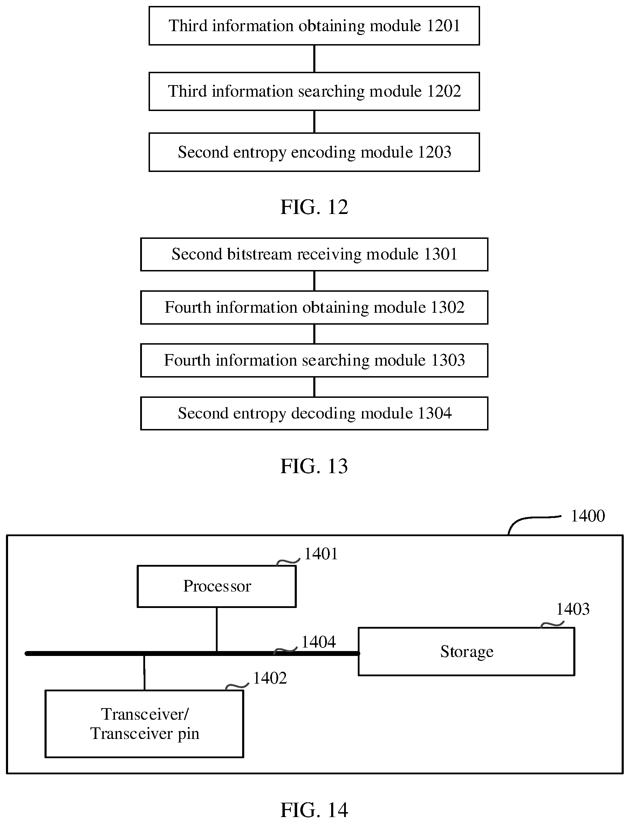

FIG. 12 is a diagram of an example of an entropy encoding apparatus. The entropy encoding apparatus may be configured to perform the method in the foregoing embodiment. Therefore, for beneficial effect that can be achieved by the entropy encoding apparatus, refer to the beneficial effect of the corresponding method provided above. Details are not described herein again.

Refer to FIG. 12. The entropy encoding apparatus includes:

a third information obtaining module 1201, configured to obtain first data, a probability distribution index of the first data, and preset information, where the preset information includes N thresholds and N quantized probability groups that correspond to N probability distributions, each of the N probability distributions corresponds to one threshold and one quantized probability group, N is a positive integer, and each of the N probability distributions corresponds to one probability distribution index;

a third information searching module 1202, configured to search, based on the probability distribution index of the first data, the preset information for a threshold and a quantized probability group that correspond to the first data; and

a second entropy encoding module 1203, configured to perform entropy encoding on the first data based on the threshold and the quantized probability group that correspond to the first data.

A first threshold is 2;

a second threshold is 2;
a third threshold is 2;
a fourth threshold is 2;
a fifth threshold is 2;
a sixth threshold is 3;
a seventh threshold is 3;
a first quantized probability group includes 251, 2, and 2;
a second quantized probability group includes 245, 5, and 5;
a third quantized probability group includes 231, 12, and 12;
a fourth quantized probability group includes 211, 22, and 22;
a fifth quantized probability group includes 188, 33, and 34;
a sixth quantized probability group includes 157, 48, 48, 1, and 1; and
a seventh quantized probability group includes 134, 57, 56, 4, and 4.

In addition, the entropy encoding apparatus may further include a module configured to generate the preset information.

FIG. 13 is a diagram of an example of an entropy decoding apparatus. The entropy decoding apparatus may be configured to perform the method in the foregoing embodiment. Therefore, for beneficial effect that can be achieved by the entropy decoding apparatus, refer to the beneficial effect of the corresponding method provided above. Details are not described herein again.

Refer to FIG. 13. The entropy decoding apparatus includes:

a second bitstream receiving module 1301, configured to receive a bitstream;
a fourth information obtaining module 1302, configured to obtain a probability distribution index of second data and preset information that are in the bitstream, where the preset information includes N thresholds and N quantized probability groups that correspond to N probability distributions, each of the N probability distributions corresponds to one threshold and one quantized probability group, N is a positive integer, and each of the N probability distributions corresponds to one probability distribution index;
a fourth information searching module 1303, configured to search, based on the probability distribution index of the second data, the preset information for a threshold and a quantized probability group that correspond to the second data; and
a second entropy decoding module 1304, configured to perform entropy decoding on the second data based on the threshold and the quantized probability group that correspond to the second data.

A first threshold is 2;

a second threshold is 2;
a third threshold is 2;
a fourth threshold is 2;
a fifth threshold is 2;
a sixth threshold is 3;
a seventh threshold is 3;
a first quantized probability group includes 251, 2, and 2;
a second quantized probability group includes 245, 5, and 5;
a third quantized probability group includes 231, 12, and 12;
a fourth quantized probability group includes 211, 22, and 22;
a fifth quantized probability group includes 188, 33, and 34;
a sixth quantized probability group includes 157, 48, 48, 1, and 1; and
a seventh quantized probability group includes 134, 57, 56, 4, and 4.

In addition, the entropy decoding apparatus may further include a module configured to generate the preset information.

In an example, FIG. 14 is a block diagram of an apparatus 1400 according to an embodiment of this application. The apparatus 1400 may include a processor 1401 and a transceiver/transceiver pin 1402, and optionally, further include a storage 1403.

Components of the apparatus 1400 are coupled together through a bus 1404. In addition to a data bus, the bus further includes a power bus, a control bus, and a status signal bus. However, for clarity of description, various buses in the figure are referred to as the bus 1404.

Optionally, the storage 1403 may be configured to store instructions in the foregoing method embodiments. The processor 1401 may be configured to: execute the instructions in the storage 1403, control a receive pin to receive a signal, and control a transmit pin to send a signal.

The apparatus 1400 may be the electronic device or a chip of the electronic device in the foregoing method embodiments.

All related content of the steps in the foregoing method embodiments may be cited in function descriptions of the corresponding functional modules. Details are not described herein again.

An embodiment of this application further provides a chip, including one or more interface circuits and one or more processors. The one or more processors receive or send data through the one or more interface circuits. When the one or more processors execute computer instructions, the foregoing related method steps for implementing the steps of methods in the foregoing embodiments are performed. The interface circuit is a transceiver/transceiver pin 1402.

An embodiment further provides a computer-readable storage medium. The computer-readable storage medium stores computer instructions. When the computer instructions are run on an electronic device, the electronic device is enabled to perform the foregoing related method steps, to implement the methods in the foregoing embodiments.

An embodiment further provides a computer program product. The computer program product includes computer instructions. When the computer instructions are executed by a computer or a processor, the computer is enabled to perform the foregoing related steps, to implement the methods in the foregoing embodiments.

**In** addition, an embodiment of this application further provides an apparatus. The apparatus may be specifically a chip, a component, or a module. The apparatus may include a processor and a storage that are connected to each other. The storage is configured to store computer-executable instructions. When the apparatus runs, the processor may execute the computer-executable instructions stored in the storage, to enable the chip to perform the methods in the foregoing method embodiments.

The electronic device, the computer-readable storage medium, the computer program product, or the chip provided in embodiments is configured to perform the corresponding method provided above. Therefore, for beneficial effect that can be achieved, refer to the beneficial effect of the corresponding method provided above. Details are not described herein again.

Based on the descriptions of the implementations, a person skilled in the art may understand that for the purpose of convenient and brief description, division into the functional modules is merely used as an example for description. In actual application, the functions may be allocated to different functional modules for completion based on a requirement. In other words, an inner structure of an apparatus is divided into different functional modules, to implement all or some of the functions described above.

**In** the several embodiments provided in this application, it should be understood that the disclosed apparatus and method may be implemented in other manners. For example, the described apparatus embodiment is merely an example. For example, division into modules or units is merely logic function division and may be other division during actual implementation. For example, a plurality of units or components may be combined or integrated into another apparatus, or some features may be ignored or not performed. **In** addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed in a plurality of different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

Any content of embodiments of this application and any content of a same embodiment may be freely combined. Any combination of the foregoing content shall fall within the scope of this application.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code, for example, a USB flash drive, a removable hard disk drive, a read-only memory (read-only memory, ROM), a random access memory (random access memory, RAM), a magnetic disk, or an optical disc.

**EP 4 787 840 A1**

Methods or algorithm steps described in combination with the content disclosed in embodiments of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk drive, a removable hard disk, a compact disc read-only memory (CD-ROM), or any other form of storage medium well-known in the art. For example, a storage medium is coupled to the processor, so that the processor can read information from the storage medium and write information into the storage medium. Certainly, the storage medium may be alternatively a component of the processor. The processor and the storage medium may be located in the ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another place. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within protection of this application.

**Claims**

1.  An entropy encoding method, wherein the method comprises:

    obtaining first data, a probability distribution index of the first data, and preset information, wherein the preset information comprises N thresholds and N quantized probability groups that correspond to N probability distributions, each of the N probability distributions corresponds to one threshold and one quantized probability group, relative entropies of n probability distributions in the N probability distributions are optimal relative entropies, a relative entropy of a first probability distribution represents a distance between a reference probability distribution corresponding to the first probability distribution and the first probability distribution, the first probability distribution is any one of the n probability distributions, N is a positive integer, n is an integer ranging from 1 to N, n is greater than a preset value, and each of the N probability distributions corresponds to one probability distribution index;
    searching, based on the probability distribution index of the first data, the preset information for a threshold and a quantized probability group that correspond to the first data; and
    performing entropy encoding on the first data based on the threshold and the quantized probability group that correspond to the first data.

2.  The method according to claim 1, wherein the preset information is obtained through calculation based on a type of the reference probability distribution for minimizing the relative entropy.

3.  The method according to claim 2, wherein the type of the reference probability distribution is a Gaussian probability distribution type.

4.  The method according to any one of claims 1 to 3, wherein n=N.

5.  The method according to any one of claims 1 to 4, wherein N=32.

6.  The method according to any one of claims 1 to 5, wherein a quantized probability group corresponding to a second probability distribution comprises H values, H is determined based on a threshold corresponding to the second probability distribution, H is a positive integer, and the second probability distribution is any one of the N probability distributions.

7.  The method according to claim 6, wherein a value range corresponding to the second probability distribution is [-(bound_table_r[i]-1), (bound_table_r[i]-1)], H is a sum of quantities of integers within the value range, an integer within the value range has a step size of M, and M is a positive integer; and

bound_table_r[i] is the threshold corresponding to the second probability distribution, i is a probability distribution index of the second probability distribution, and i is a positive integer.

8.  The method according to claim 6 or 7, wherein the H values are H numerators of quantized probabilities.

9.  The method according to claim 8, wherein a denominator of the quantized probability corresponding to the numerator of the quantized probability is an integer power of 2.

10. The method according to claim 9, wherein the denominator of the quantized probability is 256, and a quantized probability of a mark value corresponding to each of the N probability distributions is 1/256.

11. The method according to any one of claims 1 to 10, wherein a part of the N thresholds are 2, 2, 2, 2, 2, 3, and 3 respectively.

12. The method according to any one of claims 1 to 11, wherein

    a first quantized probability group comprises 251, 2, and 2;
    a second quantized probability group comprises 245, 5, and 5;
    a third quantized probability group comprises 231, 12, and 12;
    a fourth quantized probability group comprises 211, 22, and 22;
    a fifth quantized probability group comprises 188, 33, and 34;
    a sixth quantized probability group comprises 157, 48, 48, 1, and 1; and
    a seventh quantized probability group comprises 134, 57, 56, 4, and 4.

13. The method according to any one of claims 1 to 10, wherein when N=32 and n=N, the N thresholds are 1, 1, 1, 2, 2, 2, 2, 2, 3, 3, 4, 4, 5, 6, 7, 8, 9, 11, 13, 16, 18, 22, 26, 32, 38, 46, 55, 65, 77, 92, 106, and 128 respectively.

14. The method according to any one of claims 1 to 11 or claim 13, wherein when N=32 and n=N,

    a first quantized probability group comprises 255;
    a second quantized probability group comprises 255;
    a third quantized probability group comprises 255;
    a fourth quantized probability group comprises 251, 2, and 2;
    a fifth quantized probability group comprises 245, 5, and 5;
    a sixth quantized probability group comprises 231, 12, and 12;
    a seventh quantized probability group comprises 211, 22, and 22;
    an eighth quantized probability group comprises 188, 33, and 34;
    a ninth quantized probability group comprises 157, 48, 48, 1, and 1;
    a tenth quantized probability group comprises 134, 57, 56, 4, and 4;
    an eleventh quantized probability group comprises 111, 61, 61, 10, 10, 1, and 1;
    a twelfth quantized probability group comprises 94, 62, 61, 17, 17, 2, and 2;
    a thirteenth quantized probability group comprises 77, 58, 58, 24, 24, 6, 6, 1, and 1;
    a fourteenth quantized probability group comprises 63, 52, 52, 29, 29, 11, 11, 3, 3, 1, and 1;
    a fifteenth quantized probability group comprises 52, 46, 46, 31, 30, 16, 16, 6, 6, 2, 2, 1, and 1;
    a sixteenth quantized probability group comprises 43, 39, 39, 30, 30, 19, 19, 10, 10, 5, 5, 2, 2, 1, and 1;
    a seventeenth quantized probability group comprises 35, 33, 33, 28, 28, 21, 21, 13, 13, 8, 8, 4, 4, 2, 2, 1, and 1;
    an eighteenth quantized probability group comprises 29, 28, 28, 25, 25, 20, 20, 15, 15, 10, 10, 7, 7, 4, 4, 2, 2, 1, 1, 1, and 1;
    a nineteenth quantized probability group comprises 24, 23, 23, 21, 21, 19, 18, 15, 15, 12, 12, 9, 9, 6, 6, 4, 4, 3, 3, 2, 2, 1, 1, 1, and 1;
    a twentieth quantized probability group comprises 19, 19, 19, 18, 18, 17, 17, 15, 15, 12, 12, 10, 10, 8, 8, 6, 6, 4, 4, 3, 3, 2, 2, 1, 1, 1, 1, 1, 1, 1, and 1;
    a twenty-first quantized probability group comprises 17, 16, 16, 16, 16, 15, 15, 13, 13, 12, 12, 10, 10, 9, 9, 7, 7, 6, 6, 4, 4, 3, 3, 2, 2, 2, 2, 1, 1, 1, 1, 1, 1, 1, and 1;
    a twenty-second quantized probability group comprises 14, 13, 13, 13, 13, 12, 12, 12, 12, 11, 11, 10, 10, 9, 9, 8, 8, 6, 6, 5, 5, 4, 5, 4, 4, 3, 3, 2, 2, 2, 2, 1, 1, 1, 1, 1, 1, 1, 1, 1, 1, and 1;

a twenty-third quantized probability group comprises 11, 11, 11, 11, 11, 10, 10, 10, 10, 10, 10, 9, 9, 8, 8, 7, 7, 7, 7, 6, 6, 5, 5, 5, 5, 4, 4, 3, 3, 3, 3, 2, 2, 2, 2, 2, 2, 1, 1, 1, 1, 1, 1, 1, 1, 1, 1, 1, 1, 1, and 1;

a twenty-fourth quantized probability group comprises 9, 9, 9, 9, 9, 9, 9, 8, 8, 8, 8, 8, 8, 7, 7, 7, 7, 6, 6, 6, 6, 5, 5, 5, 5, 4, 4, 4, 4, 4, 4, 3, 3, 3, 3, 2, 2, 2, 2, 2, 2, 2, 2, 1, 1, 1, 1, 1, 1, 1, 1, 1, 1, 1, 1, 1, 1, 1, 1, 1, 1, 1, and 1;

a twenty-fifth quantized probability group comprises 7, 7, 7, 7, 7, 7, 7, 7, 7, 7, 7, 7, 7, 7, 6, 6, 6, 6, 6, 6, 5, 5, 5, 5, 5, 5, 5, 5, 4, 4, 4, 4, 4, 4, 3, 3, 3, 3, 3, 3, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, and 1;

a twenty-sixth quantized probability group comprises 6, 6, 6, 6, 6, 6, 6, 6, 6, 5, 6, 5, 5, 5, 5, 5, 5, 5, 5, 5, 5, 5, 5, 4, 4, 4, 4, 4, 4, 4, 4, 4, 3, 3, 3, 3, 3, 3, 3, 3, 3, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, and 1;

a twenty-seventh quantized probability group comprises 5, 5, 5, 5, 5, 5, 5, 5, 5, 4, 4, 4, 4, 4, 4, 4, 4, 4, 4, 4, 4, 4, 4, 4, 4, 4, 4, 4, 3, 3, 3, 3, 3, 3, 3, 3, 3, 3, 3, 3, 3, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-eighth quantized probability group comprises 4, 4, 4, 4, 4, 4, 4, 4, 4, 4, 4, 4, 4, 4, 4, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-ninth quantized probability group comprises 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirtieth quantized probability group comprises 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirty-first quantized probability group comprises 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1; and

a thirty-second quantized probability group comprises 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1.

15. An entropy decoding method, wherein the method comprises:

receiving a bitstream;

obtaining a probability distribution index of second data and preset information that are in the bitstream, wherein the preset information comprises N thresholds and N quantized probability groups that correspond to N probability distributions, each of the N probability distributions corresponds to one threshold and one quantized probability group, relative entropies of n probability distributions in the N probability distributions are optimal relative entropies, a relative entropy of a first probability distribution represents a distance between a reference probability distribution corresponding to the first probability distribution and the first probability distribution, the first probability distribution is any one of the n probability distributions, N is a positive integer, n is an integer ranging from 1 to N, n is greater than a preset value, and each of the N probability distributions corresponds to one probability distribution index;

searching, based on the probability distribution index of the second data, the preset information for a threshold and a quantized probability group that correspond to the second data; and

performing entropy decoding on the second data based on the threshold and the quantized probability group that correspond to the second data.

16. The method according to claim 15, wherein the preset information is obtained through calculation based on a type of the reference probability distribution for minimizing the relative entropy.

17. The method according to claim 16, wherein the type of the reference probability distribution is a Gaussian probability distribution type.

18. The method according to any one of claims 15 to 17, wherein n=N.

19. The method according to any one of claims 15 to 18, wherein N=32.

20. The method according to any one of claims 15 to 19, wherein a quantized probability group corresponding to a second probability distribution comprises H values, H is determined based on a threshold corresponding to the second probability distribution, H is a positive integer, and the second probability distribution is any one of the N probability distributions.

21. The method according to claim 20, wherein a value range corresponding to the second probability distribution is [-(bound_table_r[i]-1), (bound_table_r[i]-1)], H is a sum of quantities of integers within the value range, an integer within the value range has a step size of M, and M is a positive integer; and bound_table_r[i] is the threshold corresponding to the second probability distribution, i is a probability distribution index of the second probability distribution, and i is a positive integer.

22. The method according to claim 20 or 21, wherein the H values are H numerators of quantized probabilities.

23. The method according to claim 22, wherein a denominator of the quantized probability corresponding to the numerator of the quantized probability is an integer power of 2.

24. The method according to claim 23, wherein the denominator of the quantized probability is 256, and a quantized probability of a mark value corresponding to each of the N probability distributions is 1/256.

25. The method according to any one of claims 15 to 24, wherein a part of the N thresholds are 2, 2, 2, 2, 2, 3, and 3 respectively.

26. The method according to any one of claims 15 to 25, wherein

a first quantized probability group comprises 251, 2, and 2;
a second quantized probability group comprises 245, 5, and 5;
a third quantized probability group comprises 231, 12, and 12;
a fourth quantized probability group comprises 211, 22, and 22;
a fifth quantized probability group comprises 188, 33, and 34;
a sixth quantized probability group comprises 157, 48, 48, 1, and 1; and
a seventh quantized probability group comprises 134, 57, 56, 4, and 4.

27. The method according to any one of claims 15 to 24, wherein when N=32 and n=N, the N thresholds are 1, 1, 1, 2, 2, 2, 2, 2, 3, 3, 4, 4, 5, 6, 7, 8, 9, 11, 13, 16, 18, 22, 26, 32, 38, 46, 55, 65, 77, 92, 106, and 128 respectively.

28. The method according to any one of claims 15 to 25 or claim 27, wherein when N=32 and n=N,

a first quantized probability group comprises 255;
a second quantized probability group comprises 255;
a third quantized probability group comprises 255;
a fourth quantized probability group comprises 251, 2, and 2;
a fifth quantized probability group comprises 245, 5, and 5;
a sixth quantized probability group comprises 231, 12, and 12;
a seventh quantized probability group comprises 211, 22, and 22;
an eighth quantized probability group comprises 188, 33, and 34;
a ninth quantized probability group comprises 157, 48, 48, 1, and 1;
a tenth quantized probability group comprises 134, 57, 56, 4, and 4;
an eleventh quantized probability group comprises 111, 61, 61, 10, 10, 1, and 1;
a twelfth quantized probability group comprises 94, 62, 61, 17, 17, 2, and 2;
a thirteenth quantized probability group comprises 77, 58, 58, 24, 24, 6, 6, 1, and 1;
a fourteenth quantized probability group comprises 63, 52, 52, 29, 29, 11, 11, 3, 3, 1, and 1;

a fifteenth quantized probability group comprises 52, 46, 46, 31, 30, 16, 16, 6, 6, 2, 2, 1, and 1;

a sixteenth quantized probability group comprises 43, 39, 39, 30, 30, 19, 19, 10, 10, 5, 5, 2, 2, 1, and 1;

a seventeenth quantized probability group comprises 35, 33, 33, 28, 28, 21, 21, 13, 13, 8, 8, 4, 4, 2, 2, 1, and 1;

an eighteenth quantized probability group comprises 29, 28, 28, 25, 25, 20, 20, 15, 15, 10, 10, 7, 7, 4, 4, 2, 2, 1, 1, 1, and 1;

a nineteenth quantized probability group comprises 24, 23, 23, 21, 21, 19, 18, 15, 15, 12, 12, 9, 9, 6, 6, 4, 4, 3, 3, 2, 2, 1, 1, 1, and 1;

a twentieth quantized probability group comprises 19, 19, 19, 18, 18, 17, 17, 15, 15, 12, 12, 10, 10, 8, 8, 6, 6, 4, 4, 3, 3, 2, 2, 1, 1, 1, 1, 1, 1, 1, and 1;

a twenty-first quantized probability group comprises 17, 16, 16, 16, 16, 15, 15, 13, 13, 12, 12, 10, 10, 9, 9, 7, 7, 6, 6, 4, 4, 3, 3, 2, 2, 2, 1, 1, 1, 1, 1, 1, 1, and 1;

a twenty-second quantized probability group comprises 14, 13, 13, 13, 13, 12, 12, 12, 12, 11, 11, 10, 10, 9, 9, 8, 8, 6, 6, 5, 5, 4, 5, 4, 4, 3, 3, 2, 2, 2, 2, 1, 1, 1, 1, 1, 1, 1, 1, 1, 1, 1, and 1;

a twenty-third quantized probability group comprises 11, 11, 11, 11, 11, 10, 10, 10, 10, 10, 10, 9, 9, 8, 8, 7, 7, 7, 7, 6, 6, 5, 5, 5, 5, 4, 4, 3, 3, 3, 3, 2, 2, 2, 2, 2, 2, 1, 1, 1, 1, 1, 1, 1, 1, 1, 1, 1, 1, 1, and 1;

a twenty-fourth quantized probability group comprises 9, 9, 9, 9, 9, 9, 9, 8, 8, 8, 8, 8, 8, 7, 7, 7, 7, 6, 6, 6, 6, 5, 5, 5, 5, 4, 4, 4, 4, 4, 4, 3, 3, 3, 3, 2, 2, 2, 2, 2, 2, 2, 1, 1, 1, 1, 1, 1, 1, 1, 1, 1, 1, 1, 1, 1, 1, 1, 1, 1, and 1;

a twenty-fifth quantized probability group comprises 7, 7, 7, 7, 7, 7, 7, 7, 7, 7, 7, 7, 7, 6, 6, 6, 6, 6, 5, 5, 5, 5, 5, 5, 5, 5, 4, 4, 4, 4, 4, 4, 3, 3, 3, 3, 3, 3, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, and 1;

a twenty-sixth quantized probability group comprises 6, 6, 6, 6, 6, 6, 6, 6, 6, 5, 6, 5, 5, 5, 5, 5, 5, 5, 5, 5, 5, 5, 5, 4, 4, 4, 4, 4, 4, 4, 4, 4, 3, 3, 3, 3, 3, 3, 3, 3, 3, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-seventh quantized probability group comprises 5, 5, 5, 5, 5, 5, 5, 5, 5, 4, 4, 4, 4, 4, 4, 4, 4, 4, 4, 4, 4, 4, 4, 4, 4, 4, 4, 4, 3, 3, 3, 3, 3, 3, 3, 3, 3, 3, 3, 3, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-eighth quantized probability group comprises 4, 4, 4, 4, 4, 4, 4, 4, 4, 4, 4, 4, 4, 4, 4, 4, 3, 3, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-ninth quantized probability group comprises 3, 3, 3, 3, 3, 3, 3, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirtieth quantized probability group comprises 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirty-first quantized probability group comprises 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1; and

a thirty-second quantized probability group comprises 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1.

**29.** An entropy encoding method, wherein the method comprises:

obtaining first data, a probability distribution index of the first data, and preset information, wherein the preset information comprises N thresholds and N quantized probability groups that correspond to N probability distributions, each of the N probability distributions corresponds to one threshold and one quantized probability group, N is a positive integer, and each of the N probability distributions corresponds to one probability distribution index;

searching, based on the probability distribution index of the first data, the preset information for a threshold and a quantized probability group that correspond to the first data; and

performing entropy encoding on the first data based on the threshold and the quantized probability group that correspond to the first data, wherein

a first threshold is 2;

a second threshold is 2;

a third threshold is 2;

a fourth threshold is 2;

a fifth threshold is 2;

a sixth threshold is 3;

a seventh threshold is 3;

a first quantized probability group comprises 251, 2, and 2;

a second quantized probability group comprises 245, 5, and 5;

a third quantized probability group comprises 231, 12, and 12;

a fourth quantized probability group comprises 211, 22, and 22;

a fifth quantized probability group comprises 188, 33, and 34;

a sixth quantized probability group comprises 157, 48, 48, 1, and 1; and

a seventh quantized probability group comprises 134, 57, 56, 4, and 4.

30. The method according to claim 29, wherein when N=32,

an eighth threshold is 1;

a ninth threshold is 1;

a tenth threshold is 1;

an eleventh threshold is 4;

a twelfth threshold is 4;

a thirteenth threshold is 5;

a fourteenth threshold is 6;

a fifteenth threshold is 7;

a sixteenth threshold is 8;

a seventeenth threshold is 9;

an eighteenth threshold is 11;

a nineteenth threshold is 13;

a twentieth threshold is 16;

a twenty-first threshold is 18;

a twenty-second threshold is 22;

a twenty-third threshold is 26;

a twenty-fourth threshold is 32;

a twenty-fifth threshold is 38;

a twenty-sixth threshold is 46;

a twenty-seventh threshold is 55;

a twenty-eighth threshold is 65;

a twenty-ninth threshold is 77;

a thirtieth threshold is 92;

a thirty-first threshold is 106; and

a thirty-second threshold is 128.

31. The method according to claim 29 or 30, wherein when N=32,

an eighth quantized probability group comprises 255;

a ninth quantized probability group comprises 255;

a tenth quantized probability group comprises 255;

an eleventh quantized probability group comprises 111, 61, 61, 10, 10, 1, and 1;

a twelfth quantized probability group comprises 94, 62, 61, 17, 17, 2, and 2;

a thirteenth quantized probability group comprises 77, 58, 58, 24, 24, 6, 6, 1, and 1;

a fourteenth quantized probability group comprises 63, 52, 52, 29, 29, 11, 11, 3, 3, 1, and 1;

a fifteenth quantized probability group comprises 52, 46, 46, 31, 30, 16, 16, 6, 6, 2, 2, 1, and 1;

a sixteenth quantized probability group comprises 43, 39, 39, 30, 30, 19, 19, 10, 10, 5, 5, 2, 2, 1, and 1;

a seventeenth quantized probability group comprises 35, 33, 33, 28, 28, 21, 21, 13, 13, 8, 8, 4, 4, 2, 2, 1, and 1;

an eighteenth quantized probability group comprises 29, 28, 28, 25, 25, 20, 20, 15, 15, 10, 10, 7, 7, 4, 4, 2, 2, 1, 1, 1, and 1;

a nineteenth quantized probability group comprises 24, 23, 23, 21, 21, 19, 18, 15, 15, 12, 12, 9, 9, 6, 6, 4, 4, 3, 3, 2, 2, 1, 1, 1, and 1;

a twentieth quantized probability group comprises 19, 19, 19, 18, 18, 17, 17, 15, 15, 12, 12, 10, 10, 8, 8, 6, 6, 4, 4, 3, 3, 2, 2, 1, 1, 1, 1, 1, 1, 1, and 1;

a twenty-first quantized probability group comprises 17, 16, 16, 16, 16, 15, 15, 13, 13, 12, 12, 10, 10, 9, 9, 7, 7, 6, 6, 4, 4, 3, 3, 2, 2, 2, 2, 1, 1, 1, 1, 1, 1, 1, and 1;

a twenty-second quantized probability group comprises 14, 13, 13, 13, 13, 12, 12, 12, 12, 11, 11, 10, 10, 9, 9, 8, 8, 6, 6, 5, 5, 4, 5, 4, 4, 3, 3, 2, 2, 2, 2, 1, 1, 1, 1, 1, 1, 1, 1, 1, 1, 1, and 1;

a twenty-third quantized probability group comprises 11, 11, 11, 11, 11, 10, 10, 10, 10, 10, 10, 9, 9, 8, 8, 7, 7, 7, 7, 6, 6, 5, 5, 5, 5, 4, 4, 3, 3, 3, 2, 2, 2, 2, 2, 2, 1, 1, 1, 1, 1, 1, 1, 1, 1, 1, 1, 1, 1, and 1;

a twenty-fourth quantized probability group comprises 9, 9, 9, 9, 9, 9, 9, 8, 8, 8, 8, 8, 8, 7, 7, 7, 7, 6, 6, 6, 6, 5, 5, 5, 5, 4, 4, 4, 4, 4, 4, 3, 3, 3, 3, 2, 2, 2, 2, 2, 2, 2, 2, 1, 1, 1, 1, 1, 1, 1, 1, 1, 1, 1, 1, 1, 1, 1, 1, 1, 1, 1, and 1;

a twenty-fifth quantized probability group comprises 7, 7, 7, 7, 7, 7, 7, 7, 7, 7, 7, 7, 7, 6, 6, 6, 6, 6, 5, 5, 5, 5, 5, 5, 5, 4, 4, 4, 4, 4, 3, 3, 3, 3, 3, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, and 1;

a twenty-sixth quantized probability group comprises 6, 6, 6, 6, 6, 6, 6, 6, 6, 5, 6, 5, 5, 5, 5, 5, 5, 5, 5, 5, 5, 5, 4, 4, 4, 4, 4, 4, 4, 4, 4, 3, 3, 3, 3, 3, 3, 3, 3, 3, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-seventh quantized probability group comprises 5, 5, 5, 5, 5, 5, 5, 5, 5, 4, 4, 4, 4, 4, 4, 4, 4, 4, 4, 4, 4, 4, 4, 4, 4, 4, 4, 4, 4, 3, 3, 3, 3, 3, 3, 3, 3, 3, 3, 3, 3, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-eighth quantized probability group comprises 4, 4, 4, 4, 4, 4, 4, 4, 4, 4, 4, 4, 4, 4, 4, 4, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-ninth quantized probability group comprises 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirtieth quantized probability group comprises 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirty-first quantized probability group comprises 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1; and

a thirty-second quantized probability group comprises 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1.

32. An entropy decoding method, wherein the method comprises:

receiving a bitstream;

obtaining a probability distribution index of second data and preset information that are in in the bitstream, wherein the preset information comprises N thresholds and N quantized probability groups that correspond to N probability distributions, each of the N probability distributions corresponds to one threshold and one quantized probability group, N is a positive integer, and each of the N probability distributions corresponds to one probability distribution index;

searching, based on the probability distribution index of the second data, the preset information for a threshold and a quantized probability group that correspond to the second data; and

performing entropy decoding on the second data based on the threshold and the quantized probability group that correspond to the second data, wherein

a first threshold is 2;

a second threshold is 2;

a third threshold is 2;

a fourth threshold is 2;

a fifth threshold is 2;

a sixth threshold is 3;

a seventh threshold is 3;

a first quantized probability group comprises 251, 2, and 2;

a second quantized probability group comprises 245, 5, and 5;

a third quantized probability group comprises 231, 12, and 12;

a fourth quantized probability group comprises 211, 22, and 22;

a fifth quantized probability group comprises 188, 33, and 34;

a sixth quantized probability group comprises 157, 48, 48, 1, and 1; and

a seventh quantized probability group comprises 134, 57, 56, 4, and 4.

33. The method according to claim 32, wherein when N=32,

an eighth threshold is 1;

a ninth threshold is 1;

a tenth threshold is 1;

an eleventh threshold is 4;

a twelfth threshold is 4;

a thirteenth threshold is 5;

a fourteenth threshold is 6;

a fifteenth threshold is 7;

a sixteenth threshold is 8;

a seventeenth threshold is 9;

an eighteenth threshold is 11;

a nineteenth threshold is 13;

a twentieth threshold is 16;

a twenty-first threshold is 18;

a twenty-second threshold is 22;

a twenty-third threshold is 26;

a twenty-fourth threshold is 32;

a twenty-fifth threshold is 38;

a twenty-sixth threshold is 46;

a twenty-seventh threshold is 55;

a twenty-eighth threshold is 65;

a twenty-ninth threshold is 77;

a thirtieth threshold is 92;

a thirty-first threshold is 106; and

a thirty-second threshold is 128.

34. The method according to claim 32 or 33, wherein when N=32,

an eighth quantized probability group comprises 255;

a ninth quantized probability group comprises 255;

a tenth quantized probability group comprises 255;

an eleventh quantized probability group comprises 111, 61, 61, 10, 10, 1, and 1;

a twelfth quantized probability group comprises 94, 62, 61, 17, 17, 2, and 2;

a thirteenth quantized probability group comprises 77, 58, 58, 24, 24, 6, 6, 1, and 1;

a fourteenth quantized probability group comprises 63, 52, 52, 29, 29, 11, 11, 3, 3, 1, and 1;

a fifteenth quantized probability group comprises 52, 46, 46, 31, 30, 16, 16, 6, 6, 2, 2, 1, and 1;

a sixteenth quantized probability group comprises 43, 39, 39, 30, 30, 19, 19, 10, 10, 5, 5, 2, 2, 1, and 1;

a seventeenth quantized probability group comprises 35, 33, 33, 28, 28, 21, 21, 13, 13, 8, 8, 4, 4, 2, 2, 1, and 1;

an eighteenth quantized probability group comprises 29, 28, 28, 25, 25, 20, 20, 15, 15, 10, 10, 7, 7, 4, 4, 2, 2, 1, 1, 1, and 1;

a nineteenth quantized probability group comprises 24, 23, 23, 21, 21, 19, 18, 15, 15, 12, 12, 9, 9, 6, 6, 4, 4, 3, 3, 2, 2, 1, 1, 1, and 1;

a twentieth quantized probability group comprises 19, 19, 19, 18, 18, 17, 17, 15, 15, 12, 12, 10, 10, 8, 8, 6, 6, 4, 4, 3, 3, 2, 2, 1, 1, 1, 1, 1, 1, 1, and 1;

a twenty-first quantized probability group comprises 17, 16, 16, 16, 16, 15, 15, 13, 13, 12, 12, 10, 10, 9, 9, 7, 7, 6, 6, 4, 4, 3, 3, 2, 2, 2, 2, 1, 1, 1, 1, 1, 1, 1, and 1;

a twenty-second quantized probability group comprises 14, 13, 13, 13, 13, 12, 12, 12, 12, 11, 11, 10, 10, 9, 9, 8, 8, 6, 6, 5, 5, 4, 5, 4, 4, 3, 3, 2, 2, 2, 2, 1, 1, 1, 1, 1, 1, 1, 1, 1, 1, 1, and 1;

a twenty-third quantized probability group comprises 11, 11, 11, 11, 11, 10, 10, 10, 10, 10, 10, 9, 9, 8, 8, 7, 7, 7, 6, 6, 5, 5, 5, 4, 4, 3, 3, 3, 3, 2, 2, 2, 2, 2, 2, 1, 1, 1, 1, 1, 1, 1, 1, 1, 1, 1, 1, 1, and 1;

a twenty-fourth quantized probability group comprises 9, 9, 9, 9, 9, 9, 9, 8, 8, 8, 8, 8, 8, 7, 7, 7, 6, 6, 6, 6, 5, 5, 5, 5, 4, 4, 4, 4, 4, 4, 3, 3, 3, 2, 2, 2, 2, 2, 2, 2, 1, 1, 1, 1, 1, 1, 1, 1, 1, 1, 1, 1, 1, 1, 1, 1, 1, and 1;

a twenty-fifth quantized probability group comprises 7, 7, 7, 7, 7, 7, 7, 7, 7, 7, 7, 7, 7, 6, 6, 6, 6, 6, 5, 5, 5, 5, 5, 5, 5, 5, 4, 4, 4, 4, 4, 3, 3, 3, 3, 3, 3, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, and 1;

a twenty-sixth quantized probability group comprises 6, 6, 6, 6, 6, 6, 6, 6, 6, 5, 6, 5, 5, 5, 5, 5, 5, 5, 5, 5, 5, 5, 4, 4, 4, 4, 4, 4, 4, 4, 4, 3, 3, 3, 3, 3, 3, 3, 3, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-seventh quantized probability group comprises 5, 5, 5, 5, 5, 5, 5, 5, 5, 4, 4, 4, 4, 4, 4, 4, 4, 4, 4, 4, 4, 4, 4, 4, 4, 4, 4, 3, 3, 3, 3, 3, 3, 3, 3, 3, 3, 3, 3, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-eighth quantized probability group comprises 4, 4, 4, 4, 4, 4, 4, 4, 4, 4, 4, 4, 4, 4, 4, 3, 3, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a twenty-ninth quantized probability group comprises 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 3, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirtieth quantized probability group comprises 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1;

a thirty-first quantized probability group comprises 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 2, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1; and

a thirty-second quantized probability group comprises 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, 1, and 1.

**35.** An entropy encoding apparatus, comprising:

a first information obtaining module, configured to obtain first data, a probability distribution index of the first data, and preset information, wherein the preset information comprises N thresholds and N quantized probability groups that correspond to N probability distributions, each of the N probability distributions corresponds to one threshold and one quantized probability group, relative entropies of n probability distributions in the N probability distributions are optimal relative entropies, a relative entropy of a first probability distribution represents a distance between a reference probability distribution corresponding to the first probability distribution and the first probability distribution, the first probability distribution is any one of the n probability distributions, N is a positive integer, n is an integer ranging from 1 to N, n is greater than a preset value, and each of the N probability distributions corresponds to one probability distribution index;

a first information searching module, configured to search, based on the probability distribution index of the first data, the preset information for a threshold and a quantized probability group that correspond to the first data; and

a first entropy encoding module, configured to perform entropy encoding on the first data based on the threshold and the quantized probability group that correspond to the first data.

36. An entropy decoding apparatus, comprising:

a first bitstream receiving module, configured to receive a bitstream;

a second information obtaining module, configured to obtain a probability distribution index of second data and preset information that are in the bitstream, wherein the preset information comprises N thresholds and N quantized probability groups that correspond to N probability distributions, each of the N probability distributions corresponds to one threshold and one quantized probability group, relative entropies of n probability distributions in the N probability distributions are optimal relative entropies, a relative entropy of a first probability distribution in the n probability distributions represents a distance between a reference probability distribution corresponding to the first probability distribution and the first probability distribution, the first probability distribution is any one of the n probability distributions, N is a positive integer, n is an integer ranging from 1 to N, n is greater than a preset value, and each of the N probability distributions corresponds to one probability distribution index;

a second information searching module, configured to search, based on the probability distribution index of the second data, the preset information for a threshold and a quantized probability group that correspond to the second data; and

a first entropy decoding module, configured to perform entropy decoding on the second data based on the threshold and the quantized probability group that correspond to the second data.

37. An entropy encoding apparatus, comprising:

a third information obtaining module, configured to obtain first data, a probability distribution index of the first data, and preset information, wherein the preset information comprises N thresholds and N quantized probability groups that correspond to N probability distributions, each of the N probability distributions corresponds to one threshold and one quantized probability group, N is a positive integer, and each of the N probability distributions corresponds to one probability distribution index;

a third information searching module, configured to search, based on the probability distribution index of the first data, the preset information for a threshold and a quantized probability group that correspond to the first data; and

a second entropy encoding module, configured to perform entropy encoding on the first data based on the threshold and the quantized probability group that correspond to the first data, wherein

a first threshold is 2;

a second threshold is 2;

a third threshold is 2;

a fourth threshold is 2;

a fifth threshold is 2;

a sixth threshold is 3;

a seventh threshold is 3;

a first quantized probability group comprises 251, 2, and 2;

a second quantized probability group comprises 245, 5, and 5;

a third quantized probability group comprises 231, 12, and 12;

a fourth quantized probability group comprises 211, 22, and 22;

a fifth quantized probability group comprises 188, 33, and 34;

a sixth quantized probability group comprises 157, 48, 48, 1, and 1; and

a seventh quantized probability group comprises 134, 57, 56, 4, and 4.

38. An entropy decoding apparatus, comprising:

a second bitstream receiving module, configured to receive a bitstream;

a fourth information obtaining module, configured to obtain a probability distribution index of second data and preset information that are in the bitstream, wherein the preset information comprises N thresholds and N quantized probability groups that correspond to N probability distributions, each of the N probability distributions corresponds to one threshold and one quantized probability group, N is a positive integer, and each of the N probability distributions corresponds to one probability distribution index;

a fourth information searching module, configured to search, based on the probability distribution index of the second data, the preset information for a threshold and a quantized probability group that correspond to the second data; and

a second entropy decoding module, configured to perform entropy decoding on the second data based on the threshold and the quantized probability group that correspond to the second data, wherein

a first threshold is 2;

a second threshold is 2;

a third threshold is 2;

a fourth threshold is 2;

a fifth threshold is 2;

a sixth threshold is 3;

a seventh threshold is 3;

a first quantized probability group comprises 251, 2, and 2;

a second quantized probability group comprises 245, 5, and 5;

a third quantized probability group comprises 231, 12, and 12;

a fourth quantized probability group comprises 211, 22, and 22;

a fifth quantized probability group comprises 188, 33, and 34;

a sixth quantized probability group comprises 157, 48, 48, 1, and 1; and

a seventh quantized probability group comprises 134, 57, 56, 4, and 4.

39. An entropy encoder, configured to perform the entropy encoding method according to any one of claims 1 to 14, or configured to perform the entropy encoding method according to any one of claims 29 to 31.

40. An entropy decoder, configured to perform the entropy decoding method according to any one of claims 15 to 28, or configured to perform the entropy decoding method according to any one of claims 32 to 34.

41. An encoder, comprising the entropy encoder according to claim 39.

42. A decoder, comprising the entropy decoder according to claim 40.

43. A coder, comprising:

a storage and a processor, wherein the storage is coupled to the processor; and

the storage stores program instructions, and when the program instructions are executed by the processor, the electronic device is enabled to perform the entropy encoding method according to any one of claims 1 to 14 or perform the entropy encoding method according to any one of claims 29 to 31.

44. A coder, comprising:

a storage and a processor, wherein the storage is coupled to the processor; and

the storage stores program instructions, and when the program instructions are executed by the processor, the electronic device is enabled to perform the entropy decoding method according to any one of claims 15 to 28 or perform the entropy decoding method according to any one of claims 32 to 34.

45. A computer-readable storage medium, wherein the computer-readable storage medium stores a computer program, and when the computer program is run on a computer or a processor, the computer or the processor is enabled to perform the method according to any one of claims 1 to 34.

46. A computer program product, wherein the computer program product comprises computer instructions, and when the computer instructions are executed by a computer or a processor, steps of the method according to any one of claims 1 to 34 are performed.

10

Source device 12

Picture source 16

Raw picture
data 17

Preprocessor 18

Preprocessed
picture data 19

Encoder 20

Encoded
picture data 21

Communication
interface 22

Communication
channel 13

Destination device 14

Display device 34

Post-processed
picture data 33

Post-processor 32

Decoded
picture data 31

Decoder 30

Encoded
picture data 21

Communication
interface 28

FIG. 1A

EP 4 787 840 A1

45

FIG. 1B

FIG. 2

FIG. 3

FIG. 4

FIG. 5

FIG. 6

57

58 Bitstream 1 ——————————————

Bitstream 2 —————————

AI decoder 30

46
Second data

53
Second
feature map

Hyper decoder
network 501

Probability
distribution
index

Entropy decoder
502

55

Residual

56

Third feature map

52
First feature map

59
Reconstructed
picture

54

Decoder network
503

FIG. 7

| Obtain first data, a probability distribution index of the first data, and preset information, where the preset information includes N thresholds and N quantized probability groups that correspond to N probability distributions, and each of the N probability distributions corresponds to one threshold and one quantized probability group | S801 |

| Search, based on the probability distribution index of the first data, the preset information for a threshold and a quantized probability group that correspond to the first data | S802 |

| Perform entropy encoding on the first data based on the threshold and the quantized probability group that correspond to the first data | S803 |

FIG. 8

Receive a bitstream — S901

Obtain a probability distribution index of second data and preset information that are in the bitstream, where the preset information includes N thresholds and N quantized probability groups that correspond to N probability distributions, and each of the N probability distributions corresponds to one threshold and one quantized probability group — S902

Search, based on the probability distribution index of the second data, the preset information for a threshold and a quantized probability group that correspond to the second data — S903

Perform entropy decoding on the second data based on the threshold and the quantized probability group that correspond to the second data — S904

FIG. 9

First information obtaining module 1001

First information searching module 1002

First entropy encoding module 1003

FIG. 10

First bitstream receiving module 1101

Second information obtaining module 1102

Second information searching module 1103

First entropy decoding module 1104

FIG. 11

Third information obtaining module 1201

Third information searching module 1202

Second entropy encoding module 1203

FIG. 12

Second bitstream receiving module 1301

Fourth information obtaining module 1302

Fourth information searching module 1303

Second entropy decoding module 1304

FIG. 13

1400

1401

Processor

1403

1404

Storage

1402

Transceiver/
Transceiver pin

FIG. 14

## INTERNATIONAL SEARCH REPORT

| International application No. |
| --- |
| **PCT/CN2024/124420** |

**A. CLASSIFICATION OF SUBJECT MATTER**

H04N19/13(2014.01)i

According to International Patent Classification (IPC) or to both national classification and IPC

**B. FIELDS SEARCHED**

Minimum documentation searched (classification system followed by classification symbols)

IPC:H04N19/-

Documentation searched other than minimum documentation to the extent that such documents are included in the fields searched

Electronic data base consulted during the international search (name of data base and, where practicable, search terms used)

CNTXT, ENTXTC, CNKI: 熵, 霍夫曼, 算术, 编码, 解码, 编解码, 索引, 指引, 编号, 序号, 哈希值, 标识, 概率分布, 数据, 图像, 图片, 视频, 临界值, 界限值, 上限, 下限, 阈值, 极值, 量化, 最优, 参考概率, 距离; VEN, ENTXT, USTXT, WOTXT, IEEE, JVET: entropy+, huffman, arithmetic+, code+, decode+, codec+, index+, guide+, number+, ID, hash, value, identification +, Probability, distribution, data+, image+, picture+, video+, critical+, limit+, upper+, lower+, threshold+, extreme+, quantificat +, optimal+, reference+, distance+

**C. DOCUMENTS CONSIDERED TO BE RELEVANT**

| Category* | Citation of document, with indication, where appropriate, of the relevant passages | Relevant to claim No. |
| --- | --- | --- |
| A | US 11039138 B1 (GOOGLE LLC.) 15 June 2021 (2021-06-15)<br>entire document | 1-46 |
| A | CN 116778003 A (HUAWEI TECHNOLOGIES CO., LTD.) 19 September 2023 (2023-09-19)<br>entire document | 1-46 |
| A | CN 115604467 A (SHANGHAI SHUANGSHEN INFORMATION TECHNOLOGY CO., LTD.) 13 January 2023 (2023-01-13)<br>entire document | 1-46 |
| A | JP 2011109573 A (NIKON CORP.) 02 June 2011 (2011-06-02)<br>entire document | 1-46 |
| A | CN 114339262 A (HUAWEI TECHNOLOGIES CO., LTD.) 12 April 2022 (2022-04-12)<br>entire document | 1-46 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 November 2024** | **26 December 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 787 840 A1**

<table>
<tr><th colspan="3">INTERNATIONAL SEARCH REPORT</th><th colspan="2">International application No.</th></tr>
<tr><th colspan="3">Information on patent family members</th><th colspan="2">PCT/CN2024/124420</th></tr>
</table>

| Patent document cited in search report | | | Publication date (day/month/year) | Patent family member(s) | | | Publication date (day/month/year) |
|---|---|---|---|---|---|---|---|
| US | 11039138 | B1 | 15 June 2021 | US | 2023232001 | A1 | 20 July 2023 |
| | | | | US | 12075048 | B2 | 27 August 2024 |
| | | | | US | 2022014744 | A1 | 13 January 2022 |
| | | | | US | 11627321 | B2 | 11 April 2023 |
| CN | 116778003 | A | 19 September 2023 | WO | 2023169319 | A1 | 14 September 2023 |
| | | | | TW | 202403660 | A | 14 September 2023 |
| CN | 115604467 | A | 13 January 2023 | None | | | |
| JP | 2011109573 | A | 02 June 2011 | JP | 5493761 | B2 | 14 May 2014 |
| CN | 114339262 | A | 12 April 2022 | WO | 2022068716 | A1 | 07 April 2022 |
| | | | | CN | 114339262 | B | 14 February 2023 |
| | | | | EP | 4207766 | A1 | 05 July 2023 |
| | | | | US | 2023239516A1 | A1 | 27 July 2023 |
| | | | | JP | 2023543477 | W | 16 October 2023 |
| | | | | EP | 4207766 | A4 | 06 March 2024 |
| | | | | JP | 7500873 | B2 | 17 June 2024 |

Form PCT/ISA/210 (patent family annex) (July 2022)